# EUROPEAN PATENT APPLICATION

(11) **EP 4 517 451 A1**
(43) Date of publication of application: **05.03.2025**
(21) Application number: 24194599.7
(22) Date of filing: 14.08.2024
(51) Int. Cl.: G05B 13/02, G05B 19/042, G05B 19/418

(54) **INFORMATION PROCESSING APPARATUS, INFORMATION PROCESSING METHOD, AND INFORMATION PROCESSING PROGRAM**

(30) Priority: 25.08.2023 JP 2023137196
(71) Applicant: Yokogawa Electric Corporation, Tokyo 180-8750 (JP)
(72) Inventor: SHIMOKAWA, Tatsuya, Musashino-shi, Tokyo, 180-8750 (JP); YOSHIDA, Yusaku, Musashino-shi, Tokyo, 180-8750 (JP)
(74) Representative: Winter, Brandl - Partnerschaft mbB

(57) **Abstract**

A data processing device (10) stores definition information for defining a processing operation of each of a plurality of execution processes, accepts, as a processing pattern, a selection of each of the execution processes that are used for data processing and a selection of an execution order the selected execution process, and generates, based on the accepted processing pattern and the definition information, processing setting information for causing the processing pattern.

## Description

### FIELD

The present invention relates to an information processing apparatus, an information processing method, and an information processing program.

### BACKGROUND

In production facilities, plants, and the like, collection of pieces of measurement data using various kinds of sensors is performed with the aim of predictive maintenance, abnormality detection, and the like. The predictive maintenance and the abnormality detection are performed by analyzing the pieces of measurement data obtained by the various kinds of sensors, determining the state of a facility, capturing the sings of occurrence of abnormality, and the like.

Patent Document 1: Japanese Patent No. 6795080

However, in the production facilities, the plants, and the like, it is difficult to perform setting of appropriate data processing. For example, with software or an application that is used for the preventive maintenance and the abnormality detection performed in a production facility or a plant by utilizing the measurement data, so that, there may sometimes be a case in which an optimum data analysis is not able to be set to the facility regarding usable processes and the procedure of the processes.

Accordingly, the present invention has been conceived in light of the circumstances described above and an object thereof is to perform appropriate setting of data processing.

### SUMMARY

According to an aspect of the embodiments, an information processing apparatus includes a storage unit that stores therein definition information for defining a processing operation of each of a plurality of processes, an acceptance unit that accepts, as a processing pattern, a selection of each of the processes that are used for data processing and a selection of an execution order of the selected processes, and a generating unit that generates, based on the accepted processing pattern and the definition information, processing setting information for causing the processing pattern to be performed.

According to an aspect of the embodiments, an information processing method that causes a computer to execute a process includes holding definition information for defining a processing operation of each of a plurality of processes, accepting, as a processing pattern, a selection of each of the processes that are used for data processing and a selection of an execution order of the selected processes, and generating, based on the accepted processing pattern and the definition information, processing setting information for causing the processing pattern to be performed.

According to an aspect of the embodiments, an information processing program that causes a computer to execute a process includes holding definition information for defining a processing operation of each of a plurality of processes, accepting, as a processing pattern, a selection of each of the processes that are used for data processing and a selection of an execution order of the selected processes, and generating, based on the accepted processing pattern and the definition information, processing setting information for causing the processing pattern to be performed.

### BRIEF DESCRIPTION OF THE DRAWINGS

FIG. 1 is a diagram illustrating a configuration example and a process example of a data processing system according to an embodiment;
FIG. 2 is a block diagram illustrating a configuration example of each device included in the data processing system according to the embodiment;
FIG. 3 is a diagram illustrating one example of a definition information storage unit included in a data processing device according to the embodiment;
FIG. 4 is a diagram illustrating one example of a processing group storage unit included in the data processing device according to the embodiment;
FIG. 5 is a diagram illustrating one example of a processing pattern storage unit included in the data processing device according to the embodiment;
FIG. 6 is a diagram illustrating one example of a processing setting information storage unit included in the data processing device according to the embodiment;
FIG. 7 is a diagram illustrating one example of a processing model storage unit included in the data processing device according to the embodiment;
FIG. 8 is a diagram illustrating a specific example 1 of a display screen displayed on the data processing device according to the embodiment;
FIG. 9 is a diagram illustrating a specific example 2 of a display screen displayed on the data processing device according to the embodiment;
FIG. 10 is a diagram illustrating a specific example 3 of a display screen displayed on the data processing device according to the embodiment;
FIG. 11 is a diagram illustrating a specific example 4 of a display screen displayed on the data processing device according to the embodiment;
FIG. 12 is a diagram illustrating a specific example of a moving average calculation process performed in the data processing device according to the embodiment;
FIG. 13 is a diagram illustrating a specific example 5 of a display screen displayed on the data processing device according to the embodiment;
FIG. 14 is a flowchart illustrating one example of the flow of the process performed in the entire of the data processing system according to the embodiment;
FIG. 15 is a flowchart illustrating one example of the flow of an execution process registration process performed in the data processing system according to the embodiment;
FIG. 16 is a flowchart illustrating one example of the flow of a processing group input process performed in the data processing system according to the embodiment;
FIG. 17 is a flowchart illustrating one example of the flow of a processing pattern input process performed in the data processing system according to the embodiment;
FIG. 18 is a flowchart illustrating one example of the flow of a data processing setting process performed in the data processing system according to the embodiment;
FIG. 19 is a flowchart illustrating one example of the flow of a data processing setting confirmation process performed in the data processing system according to the embodiment;
FIG. 20 is a flowchart illustrating one example of the flow of a data processing setting decision process performed in the data processing system according to the embodiment;
FIG. 21 is a flowchart illustrating one example of the flow of a data processing execution process performed in the data processing system according to the embodiment; and
FIG. 22 is a diagram illustrating an example of a hardware configuration according to the embodiment.

### DETAILED DESCRIPTION OF THE PREFERRED EMBODIMENTS

Preferred embodiments of an information processing apparatus, an information processing method, and an information processing program according to the present invention will be explained in detail below with reference to the accompanying drawings. Furthermore, the present invention is not limited to the embodiments described below.

### Embodiment

In the following, a configuration and a process related to a data processing system 100 according to an embodiment, a configuration and a process related to each of devices included in the data processing system 100, and the flow of the process performed in the data processing system 100 will be described in this order and, at the end, effects of the embodiment will be described.

### 1. Configuration and process related to data processing system 100

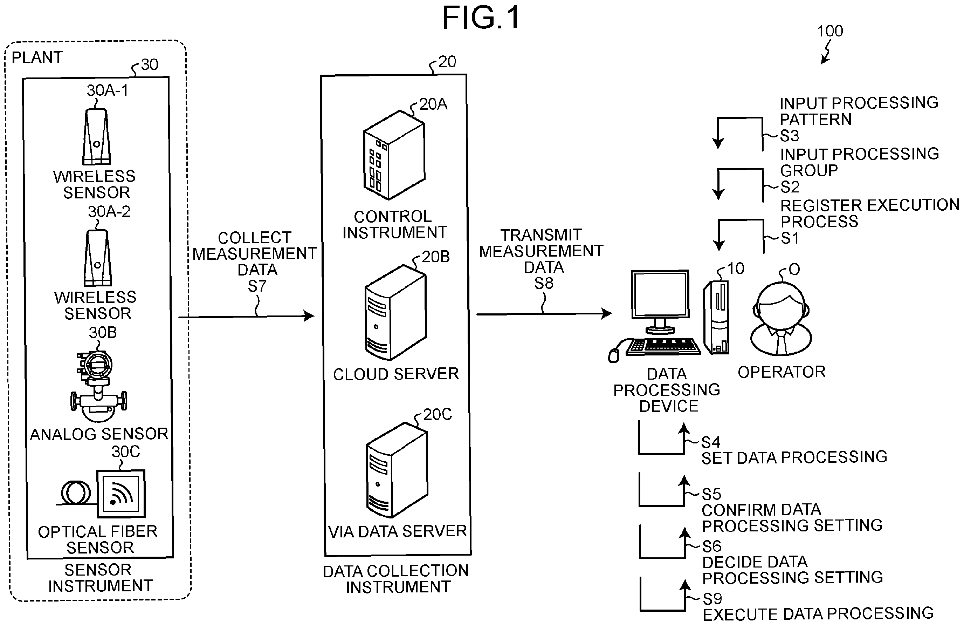

A configuration and a process related to the data processing system 100 according to the embodiment will be described in detail with reference to FIG. 1. FIG. 1 is a diagram illustrating configuration example and a process example related to the data processing system 100 according to the embodiment. In the following, a configuration example of the entire of the data processing system 100, and a process example of the entire data processing system 100 will be described in this order and, at the end, effects of the data processing system 100 will be described.

Furthermore, in the embodiment, an explanation will be given by using, as one example, remote monitoring or control of factory production performed by using a plant instrument that is a device installed in a plant; however, the example is not limited by the device and the field of use, and the remote monitoring may be applicable to remote monitoring or control of an environmental measurement including an electrical power monitor, wind power generation, a water supply and sewerage monitor, including river monitoring, and the like.

Furthermore, the data processing system 100 is not only applicable to preventive maintenance, facility maintenance, facility control, abnormality detection, and the like of the entire plant, but also applicable to data utilization in a chemical plant, data utilization in an oil plant, a Liquefied Natural Gas (LNG) production facility, data utilization in a LNG terminal, data utilization in a food manufacturing process or a pharmaceutical manufacturing process, data utilization for a motor or an electric motor drive, data utilization at the time of engine development test, maintenance, or the like, data utilization at the time of boiler management, and the like.

### 1-1. Configuration example of entire data processing system 100

A configuration example of the entire data processing system 100 will be described with reference to FIG. 1. The data processing system 100 includes a data processing device 10, a data collection instrument 20, and a sensor instrument 30. Here, the data processing device 10, the data collection instrument 20, and the sensor instrument 30 are connected via a predetermined communication network (network) (not illustrated) so as to be able to communicate each other in a wired or wireless manner. Moreover, for the predetermined communication network, it is possible to use various communication networks including the Internet, a dedicated line, or the like.

### 1-1-1. Data processing device 10

The data processing device 10 is an information processing apparatus that is used by an operator O. Moreover, in the data processing system 100 illustrated in FIG. 1, two or more of the data processing devices 10 may be included. Furthermore, the data processing device 10 may be implemented by a cloud environment, an on-premise environment, an edge environment, or the like.

### 1-1-2. Data collection instrument 20

The data collection instrument 20 is a plant instrument that collects measurement data generated in the plant. The example illustrated in FIG. 1 indicates a case in which the data collection instrument 20 is implemented by a control instrument 20A, a cloud server 20B, and a via data server 20C.

### 1-1-3. Sensor instrument 30

The sensor instrument 30 is a plant instrument that is installed in the plant and that acquires the measurement data. The example illustrated in FIG. 1 indicates a case in which the sensor instrument 30 is implemented by a wireless sensor 30A (30A-1 and 30A-2), an analog sensor 30B, and an optical fiber sensor 30C.

### 1-2. Process example of data processing system 100

A process example of the entire data processing system 100 will be described with reference to FIG. 1. Moreover, the processes performed at Steps S1 to S9 described below may also be performed in different order. Furthermore, from among the processes performed at Steps S1 to S9 described below, there may be a process that is omitted.

### 1-2-1. Execution process registration process

At a first step, the data processing device 10 registers an execution process (hereinafter, appropriately and simply referred to as a "process") as definition information (Step S1). For example, the data processing device 10 stores a data input process, a moving average calculation process, an artificial intelligence (AI) analysis process, an alarm determination process, and a data output process as each of the execution processes of executing a data analysis process (hereinafter, appropriately referred to as a "data analysis") that has been input by the operator O. Furthermore, the data processing device 10 stores a data input process, a difference mathematical operation process, a constant input process, an AI control process, and a data output process as each of the execution processes of executing a data control process (hereinafter, appropriately referred to as "data control") that has been input by the operator O.

Here, the definition information is information for defining a processing operation of each of the processes that are used for the data processing, and is a data file in which an arbitrary process for a dynamic-link library (DLL) file, an executable (EXE) file, a text file, or the like has been packaged. Furthermore, in the definition information, a set value that is used for the processing operation of each of the processes used for the data processing (hereinafter, appropriately referred to as a "parameter"), a machine learning model used in a processing operation of each of the processes (hereinafter, appropriately referred to as a "learning model"), or the like may be included.

### 1-2-2. Processing group input process

At a second step, the operator O inputs a processing group to the data processing device 10 (Step S2). For example, by operating the input screen that is displayed on the monitor screen of the data processing device 10, the operator O inputs the wireless sensor 30A (30A-1 or 30A-2) that performs the same data analysis as an analysis group.

Here, the processing group is a processing object to which the same data processing is applied, and is an analysis group in which the same data analysis process is performed, a control group in which the same data control process is performed, and the like. Furthermore, processing group may be units of measurement instruments including the sensor instrument 30, which acquires the measurement data, and the like, may be units of devices including the data collection instrument 20, which collects, sends, and transmits the measurement data, and the like, or may be units of facilities including a production facility, a plant, and the like.

### 1-2-3. Processing pattern input process

At a third step, the operator O inputs a processing pattern to the data processing device 10 (Step S3). For example, by operating the input screen displayed on the monitor screen of the data processing device 10, the operator O selects each of the processes that executes the data analysis process and the execution order of the processes, and inputs the selected processes and order as the analysis pattern of the data analysis process.

Here, processing pattern is information that includes the selected processes used for the data processing and the selected execution order, and is an analysis pattern that is a processing pattern of the data analysis process, a control pattern that is the processing pattern of the data control process, or the like.

### 1-2-4. Data processing setting process

At a fourth step, the data processing device 10 sets the data processing to be executed (Step S4). For example, in the case where the analysis pattern has been input as the processing pattern, the data processing device 10 acquires the definition information on each of the processes indicated by the analysis pattern, and generates processing setting information for indicating the data analysis process that is executable in the execution order of the processes that are indicated by the analysis pattern. Furthermore, in the case where the analysis group has been input as the processing group, the data processing device 10 associates the generated processing setting information with the analysis group.

Here, the processing setting information is information for causing the definition information on each of the processes that are indicated by the processing pattern to be executed in the execution order that is indicated by the processing pattern; includes a data file that defines a processing operation of each of the processes that are used for the data processing and that are indicated by the processing pattern (the analysis pattern or the control pattern), the set value that is used for the processing operation of each of the processes that are used for the data processing, and the execution order of these processes; and is information that is associated with the processing group (the analysis group or the control group), an processing model PM (an analysis model AM or a control model CM) that is a learning model that is used for the data processing; and the like.

At this time, the data processing device 10 is also able to confirm the processing pattern. For example, the data processing device 10 is able to acquire the analysis pattern that has been input by the operator O, and confirm whether or not the analysis pattern in which the data analysis process is not able to be executed as a result of the data input process or the data output process being unselected as each of the processes that are indicated by the analysis pattern.

### 1-2-5. Data processing setting confirmation process

At a fifth step, the data processing device 10 confirms data processing setting (Step S5). For example, in the case where the data analysis process has been set as the data processing, the data processing device 10 performs the data analysis process (analysis simulation) by using past measurement data included in the analysis group, and displays the analysis simulation result on the monitor screen. At this time, the operator O browses the analysis simulation result displayed on the monitor screen of the data processing device 10, and confirms validity of the data processing setting.

### 1-2-6. Data processing setting decision process

At a sixth step, the data processing device 10 decides the data processing setting (Step S6). For example, in the case where the data analysis process has been set as the data processing, the data processing device 10 calculates the set value that is used for the processing operation of each of the processes that are used for the data analysis process, and performs automatic setting. Furthermore, the data processing device 10 performs learning of the analysis model AM that is the learning model used for the data analysis.

### 1-2-7. Measurement data collection process

At a seventh step, the data collection instrument 20 collects the measurement data from the sensor instrument 30 (Step S7). For example, the data collection instrument 20 collects, as the measurement data acquired by the sensor instrument 30, the sensor data including temperature data, pressure data, flow rate data, and that like.

### 1-2-8. Measurement data transmission process

At an eighth step, the data collection instrument 20 transmits the measurement data to the data processing device 10 (Step S8). For example, the data collection instrument 20 transmits the sensor data including the temperature data, the pressure data, the flow rate data, and the like as the pieces of measurement data that have been collected from the sensor instrument 30 to the data processing device 10. Furthermore, the sensor instrument 30 may also transmit the collected measurement data to the data processing device 10 without passing through the data collection instrument 20.

### 1-2-9. Data processing execution process

At a ninth step, the data processing device 10 executes the data processing (Step S9). For example, in the case where the data analysis process has been set as the data processing, the data processing device 10 performs data analysis process by using the measurement data that has been received from the data collection instrument 20 and by using the generated processing setting information.

### 1-3. Effects of data processing system 100

In the following, the outline and a problem of a data processing system 100P according to a reference technology will be described, and then, the effects of the data processing system 100 will be described.

### 1-3-1. Outline of data processing system 100P

The data processing system 100P collects, in a production facility, a plant, and the like, pieces of measurement data by using the sensor instrument 30 with the aim of predictive maintenance, abnormality detection, and the like. Furthermore, the data processing system 100P performs the predictive maintenance and the abnormality detection by analyzing the pieces of measurement data obtained by the sensor instrument 30, determining the state of the facility, capturing the sings of occurrence of abnormality, and the like.

### 1-3-2. Problem of data processing system 100P

The following problem is present in the data processing system 100P. Firstly, in the data processing system 100P, usable processes and the order of the processes are fixed in the software or the application that is used for the preventive maintenance and the abnormality detection performed in the production facility and the plant by utilizing the measurement data, so that, there may sometimes be a case in which an optimum data analysis is not able to be set to the facility. Secondly, in the data processing system 100P, the production facility and the plant collect a lot of measurement data, so that it takes time and effort to set an optimum data analysis to each of the pieces of measurement data.

### 1-3-3. Outline of data processing system 100

In the data processing system 100 according to the embodiment, the following processes are performed. At a first step, the data processing device 10 registers the execution process as the definition information. At a second step, the operator O inputs a processing group to the data processing device 10. At a third step, the operator O inputs a processing pattern to the data processing device 10. At a fourth step, the data processing device 10 generates the processing setting information that is the data processing setting by using the definition information, the processing group, the processing pattern, and the like. At a fifth step, the data processing device 10 confirms the data processing setting by performing a simulation. At a sixth step, the data processing device 10 decides the data processing setting by calculating the set value and building the processing model PM. At a seventh step, the data collection instrument 20 collects the measurement data from the sensor instrument 30. At an eighth step, the data collection instrument 20 transmits the measurement data to the data processing device 10. At a ninth step, the data processing device 10 executes the data processing on the basis of the received measurement data and the data processing setting.

### 1-3-4. Effects of data processing system 100

In the data processing system 100 according to the embodiment, the following effects are provided. Firstly, in the data processing system 100, it is possible to set an optimum analysis to be performed in the facility by adding a process desired to be performed and by freely arranging the processing order in the software or the application that is used for the preventive maintenance and the abnormality detection performed in the production facility and the plant by utilizing the measurement data. Secondly, in the data processing system 100, by setting the data analysis process to a grouped analysis object and automatizing the setting of a parameter for the data analysis process, it is possible to set the data analysis process on a large amount of measurement data at a time as batch processing, and it is possible to start the data analysis process.

### 2. Configuration and process of each device included in data processing system 100

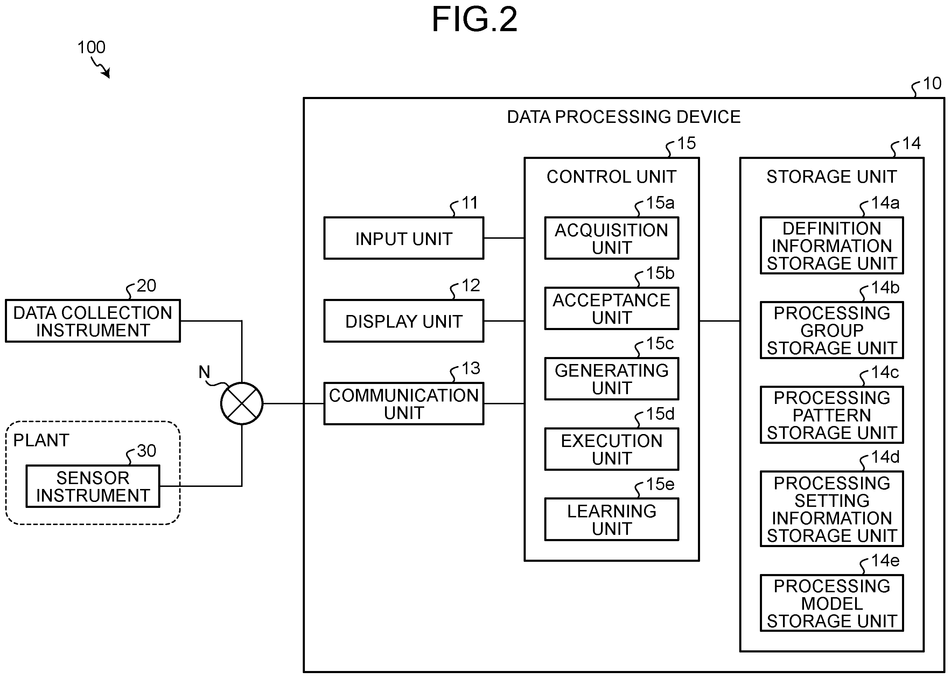

A configuration and a process of each of each of the devices included in the data processing system 100 illustrated in FIG. 1 will be described with reference to FIG. 2.

FIG. 2 is a block diagram illustrating a configuration example of each of the devices included in the data processing system 100 according to the embodiment. In the following, the configuration example of the entire data processing system 100 according to the embodiment will be described, and then, a configuration example and a process example of the data processing device 10 according to the embodiment, a configuration example and a process example of the data collection instrument 20, and a configuration example and a process example of the sensor instrument 30 will be described in detail.

### 2-1. Configuration example of entire data processing system 100

The configuration example of the entire data processing system 100 illustrated in FIG. 1 will be described with reference to FIG. 2. As illustrated in FIG. 2, the data processing system 100 includes the data processing device 10, the data collection instrument 20, and the sensor instrument 30. The data processing device 10 is connected to the data collection instrument 20 and the sensor instrument 30 by a communication network N that is implemented by the Internet, a dedicated line, or the like so as to be able to communicate each other in a wired or wireless manner. Moreover, the data processing device 10 may be installed in a cloud environment, an on-premise environment, an edge environment, or the like. Furthermore, the sensor instrument 30 is installed in the plant.

### 2-2. Configuration example and process example of data processing device 10

The configuration example and the process example of the data processing device 10 will be described with reference to FIG. 2. The data processing device 10 includes an input unit 11, a display unit 12, a communication unit 13, a storage unit 14, and a control unit 15.

### 2-2-1. Input unit 11

The input unit 11 manages an input of various kinds of information with respect to the. For example, the input unit 11 is implemented by a mouse, a keyboard, or the like, and receives an input of various kinds of information with respect to the data processing device 10.

### 2-2-2. Display unit 12

The display unit 12 manages an output of various kinds of information from the data processing device 10. For example, the display unit 12 is implemented by a display or the like, and displays various kinds of information stored in the data processing device 10. At this time, the display unit 12 displays the setting screen on which various kinds of information received by an acceptance unit 15b included in the control unit 15 that will be described later is set.

### 2-2-3. Communication unit 13

The communication unit 13 manages data communication with another device. For example, the communication unit 13 performs data communication with each of the communication devices by way of a router, or the like. Furthermore, the communication unit 13 is able to perform data communication with a terminal that is used by an operator (not illustrated).

### 2-2-4. Storage unit 14

The storage unit 14 stores therein various kinds of information that is referred to by the control unit 15 at the time of operation performed by the control unit 15, and stores therein various kinds of information that has been acquired at the time of operation performed by the control unit 15. The storage unit 14 includes a definition information storage unit 14a, a processing group storage unit 14b, a processing pattern storage unit 14c, a processing setting information storage unit 14d, and a processing model storage unit 14e. Here, the storage unit 14 may be implemented by, for example, a semiconductor memory device, such as a random access memory (RAM) or a flash memory, or a storage device, such as a hard disk or an optical disk. Moreover, in the example illustrated in FIG. 2, the storage unit 14 is installed in the data processing device 10; however, the storage unit 14 may be installed outside the data processing device 10, or a plurality of storage units may be installed.

### 2-2-4-1. Definition information storage unit 14a

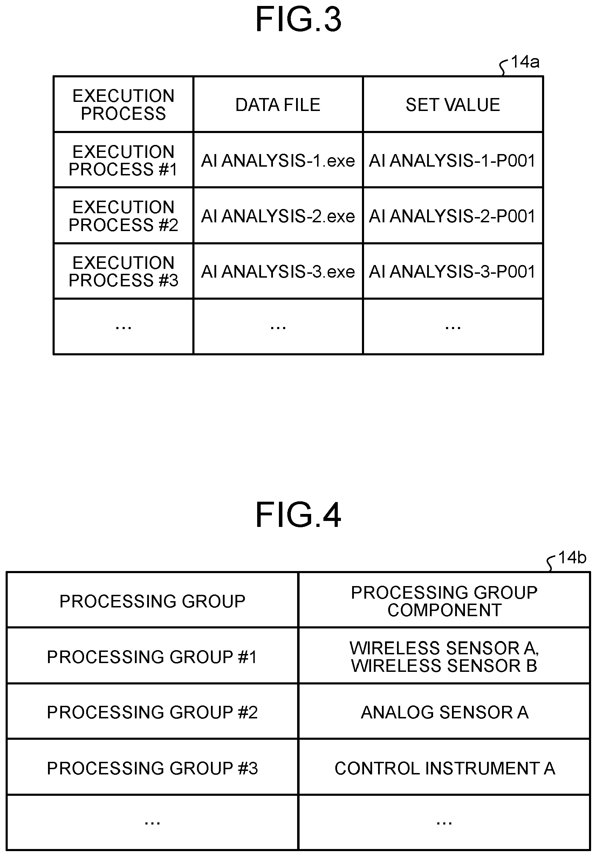

The definition information storage unit 14a stores therein the definition information. For example, the definition information storage unit 14a stores therein the definition information for defining a processing operation of each of a plurality of processes. Furthermore, the definition information storage unit 14a stores therein a data file, a set value, and the like that are input by the operator O by way of an execution process registration screen and that is accepted by the acceptance unit 15b included in the control unit 15 that will be described later. In the following, one example of data stored in the definition information storage unit 14a will be described with reference to FIG. 3. FIG. 3 is a diagram illustrating one example of the definition information storage unit 14a included in the data processing device 10 according to the embodiment. In the example illustrated in FIG. 3, the definition information storage unit 14a includes items, such as an "execution process", a "data file", and a "set value". The definition information storage unit 14a stores therein the data file and the set value in an associated manner with each of the execution processes.

The "execution process" indicates the identification information for identifying each of the processes that are used for the data processing, and is, for example, an identification number or an identification sign that is used for the data analysis process or the data control process. The "data file" is a data file in which each of the processes that are used for the data processing is executable, and is, for example, a file in a binary format, such as a DLL file or an EXE file, that has been accepted by the acceptance unit 15b, or a text file, such as a source code file, that is able to perform script execution, or the like. The "set value" is a set value that is used for the processing operation for each of the processes that are used for the data processing, and is, for example, various kinds of parameters that are used for an average period of the measurement data accepted by the acceptance unit 15b or used for learning of the processing model PM.

In other words, FIG. 3 illustrates an example in which data is stored in the definition information storage unit 14a indicating that, regarding the execution process identified by an "execution process #1 ", the data file is "AI analysis -1.exe" and the set value is an "AI analysis -1-P001"; regarding the execution process identified by an "execution process #2", the data file is "AI analysis -2.exe" and the set value is an "AI analysis -2-P001"; regarding the execution process identified by an "execution process #3 ", the data file is "AI analysis -3.exe" and the set value is an "AI analysis -3-P001"; and the like.

### (2-2-4-2. Processing group storage unit 14b)

The processing group storage unit 14b stores therein a processing group. For example, the processing group storage unit 14b stores therein the processing group that has been input by the operator O by way of the processing group input screen and that has been accepted by the acceptance unit 15b included in the control unit 15 that will be described later. In the following, one example of the data stored by the processing group storage unit 14b will be described with reference to FIG. 4. FIG. 4 is a diagram illustrating one example of the processing group storage unit 14b included in the data processing device 10 according to the embodiment. In the example illustrated in FIG. 4, the processing group storage unit 14b includes items, such as a "processing group" and a "processing group component".

The "processing group" indicates the identification information for identifying the processing group, and is, for example, an identification number or an identification sign of an analysis group indicating an analysis object to which the same data analysis process is applied or a control group indicating a control object to which the same data control process is applied. The "processing group component" is a processing object to which the same data processing is applied, and is, for example, the sensor instrument 30, the data collection instrument 20, the production facility, the plant, or the like that is included in the analysis group or the control group that has been accepted by the acceptance unit 15b.

In other words, FIG. 4 illustrates an example in which the processing group storage unit 14b stores therein data indicating that, regarding the processing group identified by a "processing group #1 ", the processing group components are a "wireless sensor A" and a "wireless sensor B" that correspond to the sensor instrument 30; regarding the processing group identified by a "processing group #2", the processing group component is an "analog sensor A" that correspond to the sensor instrument 30; and, regarding the processing group identified by a "processing group #3 ", the processing group component is a "control instrument A" that corresponds to the data collection instrument 20; and the like.

### 2-2-4-3. Processing pattern storage unit 14c

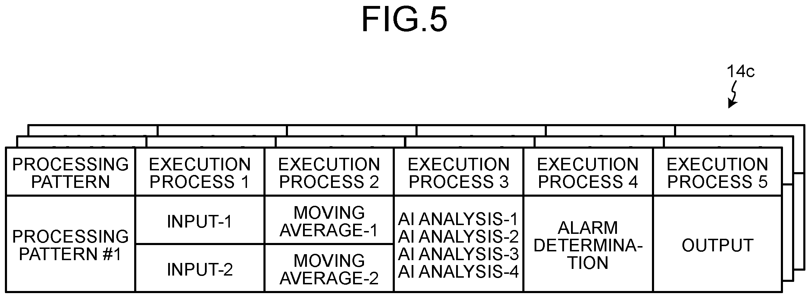

The processing pattern storage unit 14c stores therein a processing pattern. For example, the processing pattern storage unit 14c stores therein the processing pattern that has been input by the operator O by way of the processing pattern input screen, and that has been accepted by the acceptance unit 15b included in the control unit 15 that will be described later. In the following, one example of the data stored in the processing pattern storage unit 14c will be described with reference to FIG. 5. FIG. 5 is a diagram illustrating one example of the processing pattern storage unit 14c included in the data processing device 10 according to the embodiment. In the example illustrated in FIG. 5, the processing pattern storage unit 14c includes items, such as a "processing pattern" and an "execution process".

The "processing pattern" indicates the identification information for identifying the processing pattern, and is, for example, an identification number or an identification sign of an analysis pattern indicating the same data analysis process or a control pattern indicating the same data control process. The "execution process" is each of the processes used for the same data processing and the execution order of the processes and is, for example, each of the processes indicated by the analysis pattern or the control pattern that has been accepted by the acceptance unit 15b and is the execution order of the processes.

In other words, FIG. 5 illustrates an example in which the processing pattern storage unit 14c stores therein data processing indicating that, regarding the processing pattern that is identified by a "processing pattern #1 ", an "execution process 1" having the first execution order is an "input -1" and an "input -2"; an "execution process 2" that has the second execution order and that is associated with the "input -1" is a "moving average - 1" and the "execution process 2" that has the second execution order and that is associated with the " input -2" is a "moving average -2"; an "execution process 3" having the third execution order is {"AI analysis -1 ", "AI analysis -2", "AI analysis -3", and "AI analysis - 4"}; an "execution process 4" having the fourth execution order is "alarm determination"; and an "execution process 5" having the fifth execution order is an "output".

### 2-2-4-4. Processing setting information storage unit 14d

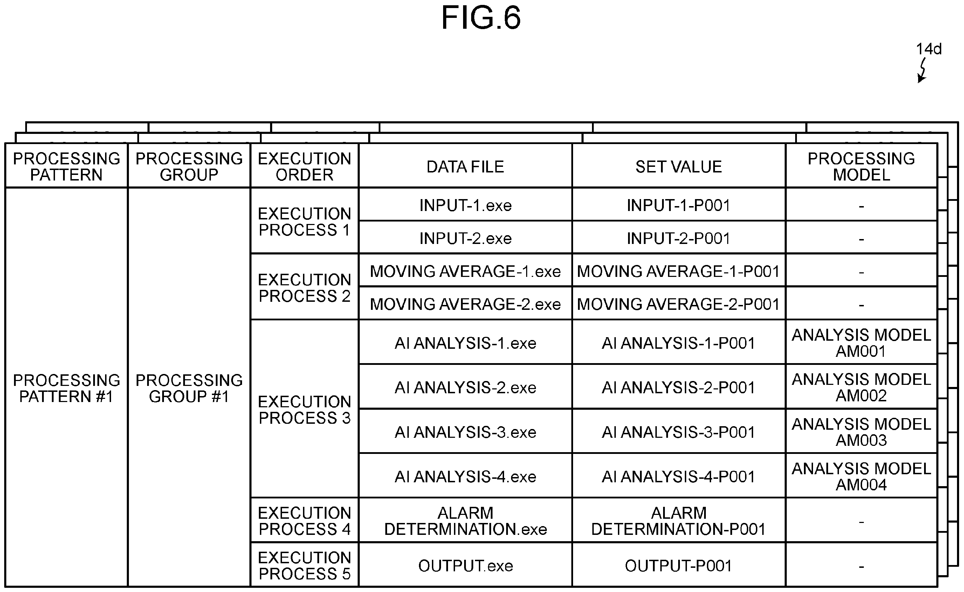

The processing setting information storage unit 14d stores therein the processing setting information. For example, the processing setting information storage unit 14d stores therein the processing setting information that has been generated by a generating unit 15c included in the control unit 15 that will be described later. In the following, one example of the data stored in the processing setting information storage unit 14d will be described with reference to FIG. 6. FIG. 6 is a diagram illustrating one example of the processing setting information storage unit 14d included in the data processing device 10 according to the embodiment. In the example illustrated in FIG. 6, the processing setting information storage unit 14d includes items, such as a "processing pattern", a "processing group", an "execution order", a "data file", a "set value", and a "processing model".

The "processing pattern" indicates the identification information for identifying the processing pattern, and is, for example, an identification number or an identification sign of the analysis pattern that indicates the same data analysis process or the control pattern that indicates the same data control process. The "processing group" indicates the identification information for identifying the processing group, and is, for example, an identification number or an identification sign of an analysis group that indicates the range of the analysis object to which the same data analysis process is applied and a control group that indicates the range of the control object to which the same data control process is applied. The "execution order" is the execution order of the processes that are used for the data processing, and is, for example, the execution order of the processes indicated by the analysis pattern or the control pattern. The "data file" is a data file in which each of the processes that are used for the data processing is executable, and is, for example, a file in a binary format, such as a DLL file or an EXE file, that has been accepted by the acceptance unit 15b, or a text file, such as a source code file, that is able to perform script execution, or the like. The "set value" is a set value that is used for the processing operation for each of the processes that are used for the data processing, and is, for example, various kinds of parameters that are used for an average period of the measurement data or learning of the processing model PM. The "processing model" indicates the identification information for identifying the processing model PM that is the learning model used for the execution process, and is, for example, an identification number or an identification sign of the analysis model AM that is used for the execution process used for the data analysis process or the control model CM that is used for the execution process used for the data control process.

In other words, FIG. 6 illustrates an example in which the processing setting information storage unit 14d stores therein data indicating that, regarding the processing pattern that is identified by the "processing pattern #1" and that is associated with the processing group identified by the "processing group #1", the "execution process 1" having the first execution order is {the data file: "input -1.exe", the set value: "input -1-P001", and the processing model: "-" (representing null)}, and {the data file: "input -2.exe", the set value: "input -2-P001", the processing model: "-"}; the "execution process 2" having the second execution order is {the data file: "moving average -1.exe", the set value: "moving average -1-P001 ", and the processing model: "-"} and {the data file: "moving average - 2.exe", the set value: "moving average -2-P001", and the processing model: "-"}; the "execution process 3" having the third execution order is {the data file: "AI analysis - 1.exe", the set value: "AI analysis -1-P001 ", and the processing model: "analysis model AM001"}, {the data file: "AI analysis -2.exe", the set value: "AI analysis -2-P001", and the processing model: "analysis model AM002"}, {the data file: "AI analysis -3.exe", the set value: "AI analysis -3-P001", and the processing model: an "analysis model AM003"}, and {the data file: "AI analysis -4.exe", the set value: an "AI analysis -4-P001", and the processing model: "analysis model AM004"}; the "execution process 4" having the fourth execution order is {the data file: "alarm determination .exe", the set value: "alarm determination -P001", and the processing model: "-"}; and the "execution process 5" having the fifth execution order is {the data file: "output .exe", the set value: "output - P001", and the processing model: "-"}.

### 2-2-4-5. Processing model storage unit 14e

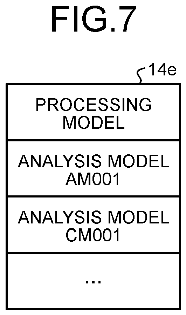

The processing model storage unit 14e stores therein the processing model PM. For example, the processing model storage unit 14e stores therein the processing model PM that is used by an execution unit 15d included in the control unit 15 that will be described later. In the following, one example of the data stored in the processing model storage unit 14e will be described with reference to FIG. 7. FIG. 7 is a diagram illustrating one example of the processing model storage unit 14e included in the data processing device 10 according to the embodiment. In the example illustrated in FIG. 7, the processing model storage unit 14e includes items, such as a "processing model".

The "processing model" is model data related to the machine learning model, and is, for example, data including execution data for executing an algorithm for the analysis model AM or the control model CM that is one of the processing models PM, a model parameter, a hyper-parameter, and the like that are set values that are used when the processing model PM is executed.

In other words, FIG. 7 illustrates an example in which the processing model storage unit 14e stores therein data corresponding to an "analysis model AM001", a "control model CM001", and the like as the model data related to the processing model PM that is used by the execution unit 15d.

### 2-2-5. Control unit 15

The control unit 15 manages the overall control of the data processing device 10. The control unit 15 includes an acquisition unit 15a, the acceptance unit 15b, the generating unit 15c, the execution unit 15d, and a learning unit 15e. Here, the control unit 15 may be implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Acquisition unit 15a

The acquisition unit 15a acquires various kinds of information. Moreover, the acquisition unit 15a may also store the acquired various kinds of information in the storage unit 14. For example, the acquisition unit 15a acquires the measurement data collected by the data collection instrument 20. At this time, the acquisition unit 15a acquires the measurement data that is measured by the sensor instrument 30 installed in the plant by way of the data collection instrument 20, or without passing through the data collection instrument 20. Moreover, the acquisition unit 15a may also store the acquired measurement data in the storage unit 14.

As a specific example, the acquisition unit 15a acquires "measurement data SD-A1-T101", "measurement data SD-A1-T102", "measurement data SD-A1-T103", and the like as the pieces of measurement data that have been periodically transmitted by the wireless sensor instrument 30A-1 that is identified by the "wireless sensor instrument A". Furthermore, the acquisition unit 15a acquires "measurement data SD-A2-T101", "measurement data SD-A2-T102", "measurement data SD-A2-T103", and the like as the pieces of measurement data that have been periodically transmitted by the wireless sensor instrument 30A-2 that is identified by the "wireless sensor instrument B".

### 2-2-5-2. Acceptance unit 15b

The acceptance unit 15b accepts and acquires various kinds of information. Moreover, the acceptance unit 15b may also store the accepted various kinds of information in the storage unit 14. In the following, an execution process registration acceptance process, a set value input acceptance process, a processing group input acceptance process, and a processing pattern input acceptance process will be described.

### Execution process registration acceptance process

The acceptance unit 15b performs the execution process registration acceptance process. For example, the acceptance unit 15b accepts, on the setting screen displayed on the display unit 12, at least one of a dynamic-link library file, an executable file, and a text file as the data file in which each of the plurality of processes are executable, and then stores the accepted data file in the storage unit 14.

A specific example of the data file will be described. The acceptance unit 15b accepts the "AI analysis -1.exe", the "AI analysis -2.exe", the "AI analysis -3.exe", the "AI analysis -4.exe", or the like as the data file related to each of the processes that have been input by the operator O by operating the execution process registration screen that is displayed on the monitor screen of the data processing device 10, and then, stores the accepted data file in the definition information storage unit 14a.

Furthermore, the acceptance unit 15b performs a test of each of the processes executed by the data file by inputting a predetermined input value to the accepted data file on the setting screen displayed on the display unit 12.

A specific example of the test of the execution process will be described. By operating the execution process registration screen that is displayed on the monitor screen of the data processing device 10, the operator O inputs an arbitrary input value that has been set by the operator O to the input data file of the "AI analysis -1.exe", the "AI analysis -2.exe", the "AI analysis -3.exe", the "AI analysis -4.exe", or the like, and allows the test result that has been output from each of the data files to be displayed on the monitor screen, so that the acceptance unit 15b performs the test of each of the processes performed by the accepted data file.

### Set value input acceptance process

The acceptance unit 15b performs the set value input acceptance process. For example, the acceptance unit 15b accepts an input of the set value that is used for the execution operation for each of the processes on the setting screen that is displayed on the display unit 12, and then, stores the accepted set value as the definition information in the storage unit 14.

A specific example of the set value will be described. The acceptance unit 15b accepts, as the set value of each of the processes that are input by the operator O by operating the processing pattern input screen that is displayed on the monitor screen of the data processing device 10, {execution process: "input -1", and the set value: "input -1-P001"}, {execution process: "input -2", and the set value: "input -2-P001"}, {execution process: "moving average -1", and the set value: "moving average -1-P001"}, {execution process: "moving average -2", and the set value: "moving average -2-P001"}, execution process: "AI analysis -1", and the set value: "AI analysis -1-P001"}, {execution process: "AI analysis -2", and the set value: "AI analysis -2-P001"}, {execution process: "AI analysis -3", and the set value: "AI analysis -3-P001"}, {execution process: "AI analysis - 4", and the set value: "AI analysis -4-P001"}, {execution process: "alarm determination .exe", and the set value: "alarm determination -P001"}, {execution process: "output", and the set value: "output -P001"}, or the like, and stores the accepted set value in the definition information storage unit 14a.

Furthermore, the acceptance unit 15b accepts, on the setting screen displayed on the display unit 12, a frequency of execution of learning of the processing model PM that is the learning model, or an assignment of a section of the learning data that is used for the learning.

A specific example related to the processing model PM will be described. The acceptance unit 15b accepts {the learning section setting: "regular learning", and the period "one week"} as the learning execution frequency of the analysis model AM that has been input by the operator O by operating the processing pattern input screen that is displayed on the monitor screen of the data processing device 10. Furthermore, the acceptance unit 15b accepts an assignment of {the learning section setting: "section assignment", and the period "T101 to T107"} as the learning data section of the analysis model AM that has been input by the operator O by operating the processing pattern input screen that is displayed on the monitor screen of the data processing device 10.

### Processing group input acceptance process

The acceptance unit 15b executes the processing group input acceptance process. For example, the acceptance unit 15b accepts the processing group that indicates the processing object to which the same data processing is applied. At this time, the acceptance unit 15b accepts the processing group that includes at least one of the instruments between at least one of the sensor instruments 30 each of which measures data and at least one of the data collection instruments 20 each of which collects the data from at least one of the sensor instruments 30.

A specific example of the processing group input acceptance process will be described. The acceptance unit 15b accepts {the processing group: "processing group #1", and the group unit: "wireless sensor A" and "wireless sensor B"}, {the processing group: "processing group #2", and the group unit: "analog sensor A"}, {the processing group: "processing group #3", and the group unit: "control instrument A"}, or the like as the processing group that has been input by the operator O by operating the processing group input screen displayed on the monitor screen of the data processing device 10, and then, stores the accepted data in the processing group storage unit 14b.

### Processing pattern input acceptance process

The acceptance unit 15b performs the processing pattern input acceptance process. For example, the acceptance unit 15b accepts, as the processing pattern, a selection of each of the processes that are used for the data processing and a selection of the execution order of the selected processes. At this time, the acceptance unit 15b accepts, as the analysis pattern, a selection of each of the processes including the analysis model AM that is the learning model and that is used for the data analysis and a selection of the execution order of the processes. Furthermore, the acceptance unit 15b accepts, as the control pattern, a selection of each of the processes including the control model CM that is the learning model and that is used for the data control and a selection of the execution order of the processes.

A specific example of the processing pattern will be described. As the processing pattern that has been input by the operator O by operating the processing pattern input screen that is displayed on the monitor screen of the data processing device 10, the acceptance unit 15b accepts {the processing pattern: "processing pattern #1", the execution process 1: "input -1" and "input -2", the execution process 2: "moving average -1" "moving average -2", the execution process 3: "AI analysis -1", "AI analysis -2", "AI analysis -3", and "AI analysis -4", the execution process 4: "alarm determination", and the execution process 5: "output"} and the execution order of the execution processes 1 to 5, and then, stores the accepted data in the processing pattern storage unit 14c.

Furthermore, the acceptance unit 15b accepts, as the processing pattern, the selection of each of the processes and the selection of the execution order of each of the selected processes on the setting screen that is displayed on the terminal that is used by the user. At this time, the acceptance unit 15b accepts, as the processing pattern, the selection of each of the processes and the execution order of each of the selected processes as a result of the user connecting the blocks that indicates the respective processes by using lines with arrows each of which indicates the execution order of the respective processes on the setting screen.

A specific example of the setting screen will be described. The acceptance unit 15b accepts, as the processing pattern, the execution process and the execution order as a result of the operator O selecting, on the processing pattern input screen that is displayed on the monitor screen of the data processing device 10, the blocks indicating the execution processes displayed as "input -1", "input -2", "moving average -1 ", "moving average -2", "AI analysis -1 ", "AI analysis -2", "AI analysis -3", "AI analysis -4", "alarm determination", and "output", and connecting the blocks by the line segments with arrows that indicate the execution order.

### 2-2-5-3. Generating unit 15c

The generating unit 15c generates various kinds of information. Moreover, the generating unit 15c stores the various kinds of information in the storage unit 14. Furthermore, the generating unit 15c acquires the various kinds of information stored in the storage unit 14. In the following, a processing pattern confirmation process, a processing setting information generating process, a process setting confirmation process, and a set value calculation process will be described.

### Processing pattern confirmation process

The generating unit 15c performs the processing pattern confirmation process. For example, the generating unit 15c determines whether or not the data processing has been performed by confirming the block that indicates each of the processes indicated by the processing pattern and the arrangements of the arrows that indicate the execution order of the processes.

A specific example of the processing pattern confirmation process will be described. Regarding the "processing pattern #1" that has been accepted by the acceptance unit 15b by way of the setting screen, the generating unit 15c determines whether or not the data processing is able to be performed by performing a syntax check of the processing pattern by checking whether at least one of an "input" block that indicates an input process and an "output" block that indicates an output process, whether a line segment with an arrow that indicates an input or an output of the data is connected between the blocks as the arrangement of the arrow, whether the number of line segments with the arrows each of which indicates the input or the output of the data that is connected to each of the blocks agree with a defined value, and the like. Furthermore, in the case where it is not possible to perform the data processing on the "processing pattern #1 ", the generating unit 15c may display a notification of prompting the user to change the setting indicating that "Please resetting the processing pattern #1", or the like on the monitor screen.

### Processing setting information generating process

The generating unit 15c performs the processing setting information generating process. For example, the generating unit 15c generates the processing setting information for causing the processing pattern to be executed on the basis of the accepted processing pattern and the definition information. At this time, the generating unit 15c generates the processing setting information in which the accepted analysis pattern is associated with the definition information related to each of the processes indicated by the analysis pattern as the accepted processing pattern. Furthermore, the generating unit 15c generates the processing setting information in which the accepted control pattern is associated with the definition information related to each of the processes indicated by the control pattern as the accepted processing pattern. Furthermore, the generating unit 15c associates the processing group with the processing setting information.

A specific example of the processing setting information generating process will be described. The generating unit 15c generates, regarding the "processing pattern #1 ", by referring to the definition information storage unit 14a and the processing pattern storage unit 14c, the processing setting information that includes the data file and the set value corresponding to {the execution order: "execution process 1", the data file: "input -1.exe", and the set value: "input -1-P001"}, {the execution order: "execution process 1", the data file: "input -2.exe", and the set value: "input -2-P001"}, {the execution order: "execution process 2", the data file: "moving average -1.exe", and the set value: "moving average -1-P001"}, {the execution order: "execution process 2", the data file: "moving average - 2.exe", and the set value: "moving average -2-P001"}, {the execution order: "execution process 3", the data file: "AI analysis -1.exe", and the set value: "AI analysis -1-P001 "}, {the execution order: "execution process 3", the data file: "AI analysis -2.exe", and the set value: "AI analysis -2-P001"}, {the execution order: "execution process 3", the data file: "AI analysis -3.exe", and the set value: "AI analysis -3-P001"}, {the execution order: "execution process 3", the data file: "AI analysis -4.exe", and the set value: "AI analysis -4-P001"}, {the execution order: "execution process 4", the data file: "alarm determination .exe", and the set value: "alarm determination -P001 "}, and {the execution order: "execution process 5", the data file: "output .exe", and the set value: "output - P001"}.

Furthermore, regarding the processing setting information related to the "processing pattern #1 ", the generating unit 15c associates, by referring to the processing model storage unit 14e, the execution processes of an "AI analysis -1", an "AI analysis -2", an "AI analysis -3", and an "AI analysis -4" performed by using the processing model PM with an "analysis model AM001 ", an "analysis model AM002", an "analysis model AM003", and an "analysis model AM004", respectively, that correspond to the identification information related to the processing model PM.

Furthermore, regarding the processing setting information related to the "processing pattern #1 ", the generating unit 15c associates the "processing group #1" by referring to the processing group storage unit 14b.

### Process setting confirmation process

The generating unit 15c executes the process setting confirmation process. For example, the generating unit 15c performs a simulation of the data processing with respect to the data related to the processing object using the processing setting information that is used for performing the processing pattern, and displays the simulation result.

A specific example of the process setting confirmation process will be described. Regarding the "wireless sensor A" that belongs to the "processing group #1" and in which the "processing pattern #1" has been set, the generating unit 15c acquires the past measurement data of "measurement data SD-A1-T001", "measurement data SD-A1-T002", "measurement data SD-A1-T003", and the like measured by the "wireless sensor A", inputs the acquired measurement data, and performs the simulation of the data processing used for the processing setting information. Furthermore, as the simulation result of the data processing performed by using the "processing pattern #1", the generating unit 15c displays a time series graph that indicates the measurement data obtained by the "wireless sensor A", a time series graph of the alarm determination obtained by the "wireless sensor A", and the like as a process setting confirmation screen on the monitor screen of the data processing device 10. At this time, instead of the past measurement data, the generating unit 15c is also able to acquire the measurement data that has been registered by the operator O in advance, and performs the simulation of the data processing by using the "processing pattern #1".

### Set value calculation process

The generating unit 15c performs the set value calculation process. For example, by using a predetermined algorithm that has been applied to each of the processes or by using the history information related to the processing operation used for each of the processes, the generating unit 15c calculates a set value that is used to perform each of the processes. At this time, by applying the zero cross method to the time series data that has been input each of the processes, the generating unit 15c calculates an average period of the time series data. Furthermore, the generating unit 15c calculates, by using the history information, the set value that is used for the learning of the learning model.

A specific example of the average period of the data will be described. Regarding the "wireless sensor A" that belongs to the "processing group #1" and in which the "processing pattern #1" is set, the generating unit 15c acquires the past measurement data of the "measurement data SD-A1-T001", the "measurement data SD-A1-T002", the "measurement data SD-A1-T003", and the like that are measured by the "wireless sensor A", applies the zero cross method to the acquired measurement data, calculates the average period "moving average -1-P002" of the data corresponding to the set value, updates the set value that is stored in the definition information storage unit 14a, and updates the set value that is stored in the processing setting information storage unit 14d.

Furthermore, A specific example of the set value that is used for the learning will be described. Regarding the "wireless sensor A" that belongs to the "processing group #1" and in which the "processing pattern #1" is set, the generating unit 15c acquires the history information including the output data, such as the past measurement data and the alarm determination, extracts the period in which an appropriate data analysis process included in the acquired history information is being performed, updates the set value stored in the definition information storage unit 14a by regarding the model parameter of the "AI analysis -1-P002" associated with the period as an effective set value on the basis of the past track record or an empirical rule, and updates the set values stored in the processing setting information storage unit 14d.

### 2-2-5-4. Execution unit 15d

The execution unit 15d performs various kinds of processes. Moreover, the execution unit 15d acquires the various kinds of information stored in the storage unit 14. In the following, a data processing execution process and a model learning execution process will be described. Moreover, the process of the execution unit 15d may be implemented in the data processing device 10, or may be implemented by an external device that is installed outside the data processing device 10 and that performs the data analysis and the data control.

### Data processing execution process

The execution unit 15d performs the data processing execution process. For example, the execution unit 15d performs the data processing by using the processing setting information. At this time, the execution unit 15d performs the data analysis on the data corresponding to the analysis object by using the processing setting information used for performing the analysis pattern including the data analysis obtained by the trained learning model. Here, the execution unit 15d performs the data analysis of the data measured by the sensor instrument 30 installed in the plant and the data collected by the data collection instrument 20. Furthermore, the execution unit 15d performs the data control on the data related to the control object by using the processing setting information used for performing the control pattern including the data control obtained by the trained learning model. Here, the execution unit 15d performs the data control that controls the plant instruments that are installed in the plant. In addition, in the case where the execution unit 15d acquires the data corresponding to the processing object, the execution unit 15d performs the data processing by using the processing setting information that is associated with the processing group to which the data corresponding to the processing object belongs. Furthermore, the execution unit 15d performs the data processing on the processing object by using the calculated set value.

A specific example of the data processing execution process will be described. Regarding the "wireless sensor A" that belongs to the "processing group #1" and in which the "processing pattern #1" has been set, the execution unit 15d acquires the measurement data of the "measurement data SD-A1-T101", the "measurement data SD-A1-T102", the "measurement data SD-A1-T103", and the like that have been measured by the "wireless sensor A", and performs the data processing on the basis of the "processing pattern #1" by using the processing setting information used for performing the "processing pattern #1". At this time, also regarding the "wireless sensor B" that belongs to the "processing group #1", the execution unit 15d acquires the measurement data of the "measurement data SD-A2-T101", the "measurement data SD-A2-T102", the "measurement data SD-A2-T103", and the like that have been acquired by the "wireless sensor B", and performs the data processing on the basis of the "processing pattern #1" by using the processing setting information that includes the set value and that is used for performing the "processing pattern #1".

### 2-2-5-5. Learning unit 15e

The learning unit 15e performs various kinds of machine learning. Moreover, the learning unit 15e generates the processing model PM by performing learning of the processing model PM (the analysis model AM and the control model CM) that is a learning model stored by the storage unit 14. In the following, the model learning execution process will be described.

### Model learning execution process

The learning unit 15e performs the model learning execution process. For example, the learning unit 15e performs learning of the processing model PM corresponding to the learning model by using the learning data. At this time, the learning unit 15e performs the analysis model AM by using the learning data corresponding to the analysis object. Furthermore, the learning unit 15e performs learning of the control model CM by using the learning data corresponding to the control object.

A specific example of the model learning execution process will be described. Regarding the "analysis model AM001" that is the analysis model AM included in the processing model PM, the learning unit 15e acquires the measurement data included in the learning data section "T101 to T107" included in the analysis model AM assigned by the operator O, inputs the acquired measurement data to a learning process as labeled learning data, and builds a trained processing model PM by performing learning by updating the model parameters that are the set values.

### 2-3. Specific example of each process performed by data processing device 10

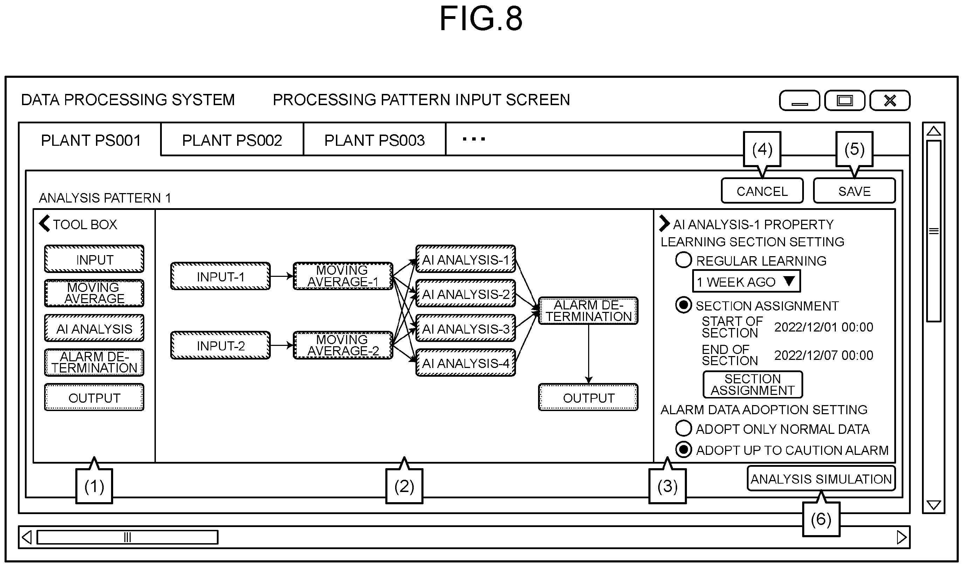

A specific example of each of the processes performed by the data processing device 10 will be described with reference FIG. 8 to FIG. 13. In the following, a specific example of the display screen of the data processing device 10 and a specific example of the set value calculation process will be described.

### 2-3-1. Specific example 1 of display screen displayed on data processing device 10

In the following, a specific example 1 of the display screen that is displayed on the display unit 12 included in the data processing device 10 and a processing pattern input screen in which an analysis pattern is able to be input will be described with reference to FIG. 8. FIG. 8 is a diagram illustrating the specific example 1 of the display screen displayed on the data processing device 10 according to the embodiment. In the following, a tool box screen, a processing flow editing screen, and a property screen that are displayed on the "processing pattern input screen of the data processing system" will be described.

### 2-3-1-1. Tool box screen

The data processing device 10 displays a tool box screen for each processing pattern (see (1) in FIG. 8). In the example illustrated in FIG. 8, the data processing device 10 displays, on the tool box screen associated with the processing pattern of the "analysis pattern 1", an "input", a "moving average", an "AI analysis", an "alarm determination", and an "output" as the blocks that indicate the execution process that is selectable by the operator O. At this time, the operator O is able to selects each of the processes by performing a click operation, on the tool box screen, on the block that is desired to be used as the execution process that constitutes the data analysis process.

### 2-3-1-2. Processing flow editing screen

The data processing device 10 displays a processing flow editing screen for each processing pattern (see (2) in FIG. 8). In the example illustrated in FIG. 8, the data processing device 10 displays, on the processing flow editing screen of the processing pattern of the "analysis pattern 1", the "input -1", the "input -2", the "moving average -1", the "moving average -2", the "AI analysis -1 ", the "AI analysis -2", the "AI analysis -3", the "AI analysis -4", the "alarm determination", and the "output" as the blocks that have been selected by the operator O, that indicate the execution processes, and that are connected by lines each other. At this time, the operator O is able to accept the execution process and the execution order as the "analysis pattern 1" by performing a drag operation and a drop operation on the blocks that have been selected on the tool box screen, arranging the blocks on the processing flow editing screen, and connecting each of the blocks by a line segment with an arrow.

### 2-3-1-3. Property screen

The data processing device 10 displays the property screen for each processing pattern (see (3) in FIG. 8). In the example illustrated in FIG. 8, the data processing device 10 displays the setting items of a "learning section setting" and an "alarm data adoption setting" on the property screen of the execution process of the "AI analysis -1" indicated in the processing pattern of the "analysis pattern 1". At this time, the operator O is able to set the learning that is performed by using the periodically acquired pieces of learning data and that is related to the learning section of the "AI analysis -1" by performing a click operation on the radio button of the "regular learning" indicated in the "learning section setting" and selecting a regular learning period (for example, "one week ago") from a pull-down menu. Furthermore, the operator O is able to set the learning that is performed by using the pieces of learning data in a period that has been assigned for the learning section of the "AI analysis -1" by performing a click operation on the radio button of the "section assignment" indicated in the "learning section setting", performing a click operation on the "section assignment" button, and allowing a graph of the measurement data in the assigned past section to be displayed, and inputting, on the graph, items of a "start of section" and an "end of section" that indicate the section assignment. Furthermore, regarding the "alarm data adoption setting" that is the setting for selecting the learning data to be used for the machine learning, the operator O is able to set which data is to be used for the learning data in accordance with the data analysis result (a normal state or an alarm state) by performing a click operation on the radio button of "adopt only normal" or "adopt up to caution alarm".

### 2-3-1-4. Others

As indicated by the example illustrated in FIG. 8, the data processing device 10 is able to display a "cancel" button for cancelling an input of the processing pattern (see (4) in FIG. 8), a "save" button for deciding the input of the processing pattern (see (5) in FIG. 8), and an "analysis simulation" button for performing a simulation for determining whether or not the input processing pattern is executable (see (6) in FIG. 8).

### 2-3-2. Specific example 2 of display screen displayed on data processing device 10

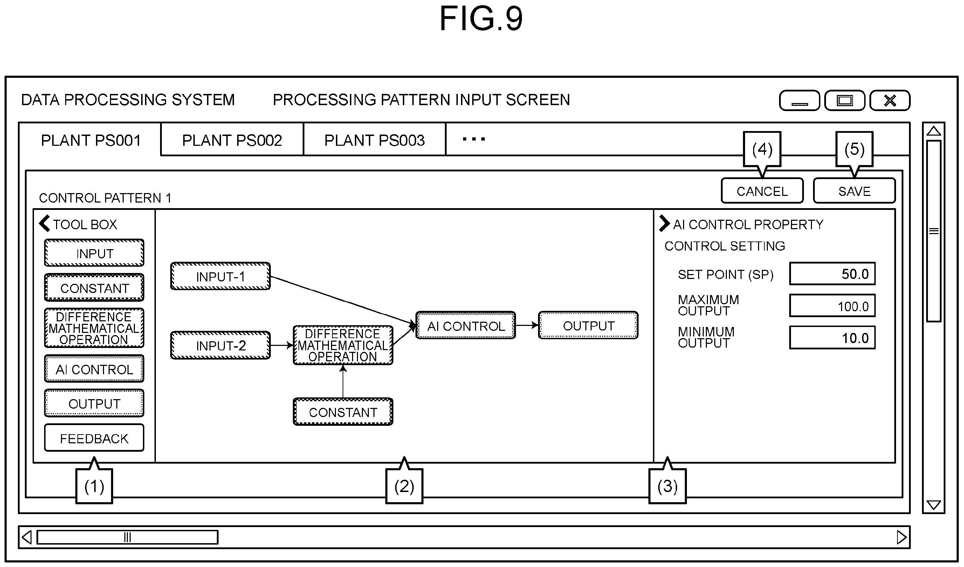

In the following, a specific example 2 of the display screen that is displayed on the display unit 12 included in the data processing device 10 and a processing pattern input screen in which a control pattern is able to be input will be described with reference to FIG. 9. FIG. 9 is a diagram illustrating the specific example 2 of the display screen displayed by the data processing device 10 according to the embodiment. In the following, a tool box screen, a processing flow editing screen, and a property screen that are displayed on the "processing pattern input screen provided in the data processing system" will be described.

### 2-3-2-1. Tool box screen

The data processing device 10 displays the tool box screen for each processing pattern (see (1) in FIG. 9). In the example illustrated in FIG. 9, the data processing device 10 displays, on the tool box screen associated with the processing pattern of the "control pattern 1", an "input", a "constant", "difference mathematical operation", an "AI control", an "output", and a "feedback" as the blocks that indicate the execution process selectable by the operator O. At this time, the operator O is able to select each of the processes by performing a click operation, on the tool box screen, on the block that is desired to be used as the execution process constituting the data analysis process.

### 2-3-2-2. Processing flow editing screen

The data processing device 10 displays a processing flow editing screen for each processing pattern (see (2) in FIG. 9). In the example illustrated in FIG. 9, the data processing device 10 displays, on the processing flow editing screen of the processing pattern of the processing pattern of the "control pattern 1", the "input -1", the "input -2", the "difference mathematical operation", the "constant", the "AI control", and the "output" as the blocks that have been selected by the operator O, that indicate the execution processes, and that are connected by lines each other. At this time, the operator O is able to define the execution process and the execution order as the "control pattern 1" by performing a drag operation and a drop operation on the blocks that have been selected on the tool box screen, arranging the blocks on the processing flow editing screen, and connecting each of the blocks by a line segment with an arrow.

### 2-3-2-3. Property screen

The data processing device 10 displays the property screen for each processing pattern (see (3) in FIG. 9). In the example illustrated in FIG. 9, the data processing device 10 displays the setting items of the "control setting" on the property screen of the execution process of the "AI control" indicated in the processing pattern of the "control pattern 1". At this time, regarding the "control setting", the operator O is able to set a threshold of the like of the data control process of the "AI control" by inputting an arbitrary value to each of the text boxes of a "set point (SP)" that is a set point of a flow rate or the like to be controlled, a "maximum output" that is the maximum limit value in which an actuator or the like is normally operated, and a "minimum output" that is the minimum limit value in which the actuator or the like is normally operated.

### 2-3-2-4. Others

As indicated by the example illustrated in FIG. 9, the data processing device 10 is able to display a "cancel" button for cancelling an input of the processing pattern (see (4) in FIG. 9), and a "save" button for deciding the input of the processing pattern processing pattern (see (5) in FIG. 9).

### 2-3-3. Specific example 3 of display screen displayed on data processing device 10

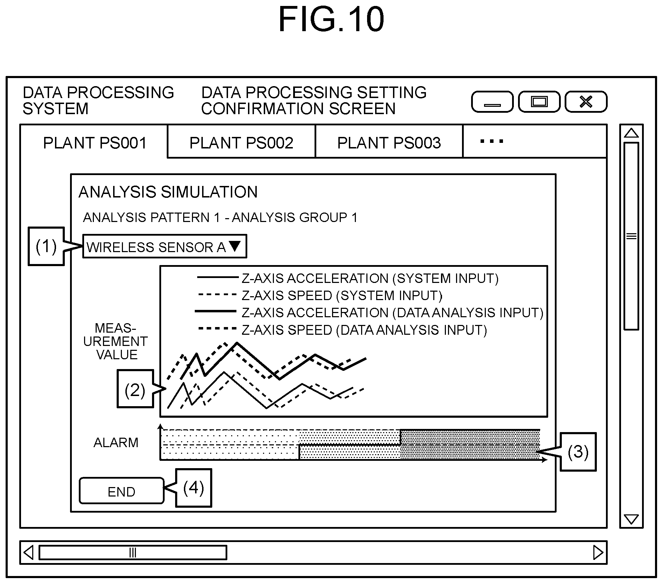

In the following, a specific example 3 of the display screen that is displayed on the display unit 12 included in the data processing device 10 and a data processing setting confirmation screen that displays the simulation result obtained based of the input processing pattern will be described with reference to FIG. 10. FIG. 10 is a diagram illustrating the specific example 3 of the display screen displayed by the data processing device 10 according to the embodiment. In the following, a processing object, a measurement value graph, and an alarm graph that are displayed on the "data processing setting confirmation screen of the data processing system".

### 2-3-3-1. Processing object

The data processing device 10 displays the simulation result for each processing object that has been selected by the operator O (see (1) in FIG. 10). In the example illustrated in FIG. 10, the data processing device 10 displays, as the processing object, a "wireless sensor A" in which the processing pattern of the "analysis pattern 1" has been set and that belongs to the processing group indicated by the "analysis group 1" that has been automatically read. At this time, the operator O is able to select, from the pull-down menu, the processing object of the simulation result that is desired to be displayed.

### 2-3-3-2. Measurement value graph

The data processing device 10 displays a measurement value graph that is a time series graph of the measurement data for each processing object (see (2) in FIG. 10). In the example illustrated in FIG. 10, the data processing device 10 displays, as the measurement data measured by the "wireless sensor A" and the system input value that is the input value with respect to the data analysis process, the time series graphs of the "Z-axis acceleration (system input)" (solid line), and the "Z-axis speed (system input)" (broken line), and also displays, as the data analysis input value that is the measurement data that is obtained after the moving average and that is input to the data analysis process, the time series graphs of the "Z-axis acceleration (data analysis input)" (thick solid line), and the "Z-axis speed (data analysis input)" (thick broken line).

### 2-3-3-3. Alarm graph

The data processing device 10 displays an alarm graph that is the time series graph of an alarm for each processing object (see (3) in FIG. 10). In the example illustrated in FIG. 10, the data processing device 10 displays the time series graph indicating an alarm state that has been analyzed from the measurement data obtained by the "wireless sensor A". Moreover, the alarm is divided into levels in accordance with the degree of severity of the abnormality detection, and is displayed in different colors based on "normal" (no abnormality), "caution" (detect a sign of abnormality), "warning" (detect abnormality), and the like. In the example illustrated in FIG. 10, in the case where the measurement data obtained by the processing object indicated by the "wireless sensor A" is input to the processing pattern of the "analysis pattern 1" and performs a simulation, an alarm output is changed over time in the order of the "normal", the "caution", and the "warning".

### 2-3-3-4. Others

As indicated by the example illustrated in FIG. 10, the data processing device 10 is able to display an "end" button that is used to conclude a display of the simulation result (see (4) in FIG. 10). Furthermore, in addition to the measurement value graph and the alarm graph, the data processing device 10 is also able to display a histogram graph or a frequency spectral graph as the simulation result.

### 2-3-4. Specific example 4 of display screen displayed on data processing device 10

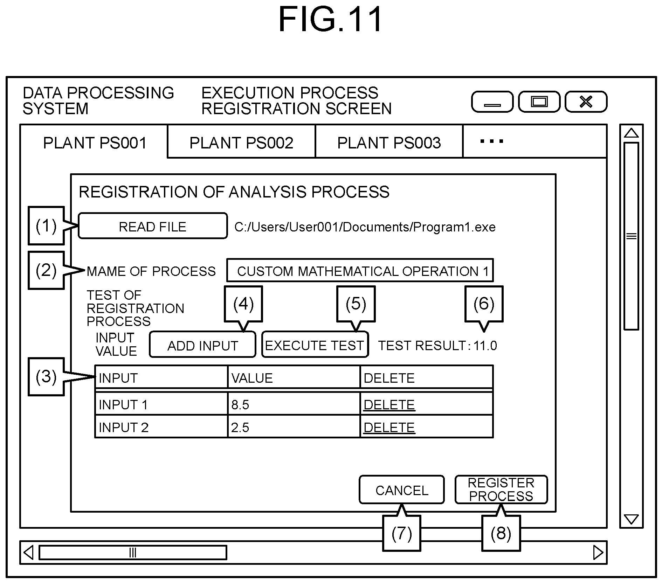

In the following, a specific example 4 of the display screen that is displayed on the display unit 12 included in the data processing device 10 and an execution process registration screen for registering the execution process used for the data processing will be described with reference to FIG. 11. FIG. 11 is a diagram illustrating the specific example 4 of the display screen displayed on the data processing device 10 according to the embodiment. In the following, a file selection button, a process name input box, and a registration process test setting item that are displayed on the "execution process registration screen provided in the data processing system" will be described.

### 2-3-4-1. File selection button

The data processing device 10 displays a file selection button that is used to register a data file by the operator O (see (1) in FIG. 11). In the example illustrated in FIG. 11, the data processing device 10 displays the executable file "c:\Users\User001\Documents\Program1.exe" as the data file of the execution process to be registered. At this time, the operator O is able to select another data file by performing a click operation again on a "read file" button.

### 2-3-4-2. Process name input box

The data processing device 10 displays a process name input box for inputting the name of a data file received by the operator O (see (2) in FIG. 11). In the example illustrated in FIG. 11, the data processing device 10 displays a text box in which a "custom mathematical operation 1" has been input as the name of the data file of the execution process to be registered. At this time, the operator O is able to change the name of the data file by performing a click operation on the text box.

### 2-3-4-3. Registration process test setting item

The data processing device 10 displays a registration process test setting item for performing a test conducted to confirm the processing operation of the data file indicated by the execution process to be registered (see (3) to (6) in FIG. 11).

In the example illustrated in FIG. 11, at a first step, the data processing device 10 displays a table that indicates each of the input values that are used to perform the test of the registration process (see (3) in FIG. 11). At this time, the operator O inputs an arbitrary value in the column of the "value" associated with each of the inputs. Furthermore, when the operator O desires to reduce the number of inputs, the operator O performs a click operation on the "delete" button that is located on the column of the "delete" associated with the input that is desired to be deleted.

At a second step, the data processing device 10 displays an "add input" button (see (4) in FIG. 11). When the operator O desires to increase the number of inputs, the operator O performs a click operation on the "add input" button. In the case where the number of inputs is increased or decreased as a result of the operation performed by the operator O, the data processing device 10 updates the table in accordance with the number of inputs and displays the updated table.

At a third step, the data processing device 10 displays an "execute test" button (see (5) in FIG. 11). At this time, when the operator O ends the input of the value of each of the input fields, the operator O is able to perform a test of the registration process by performing a click operation on the "execute test" button.

At a fourth step, the data processing device 10 displays a "test result" (see (6) in FIG. 11). In the example illustrated in FIG. 11 (6), in the case where the "custom mathematical operation 1" is a process of returning the sum of two inputs, if a test is performed by assigning an "input 1" to "8.5" and assigning an "input 2" to "2.5", the data processing device 10 displays a value of "11.0" that is the sum of the input 1 and the input 2 as the test result.

### 2-3-4-4. Others

As indicated by the example illustrated in FIG. 11, the data processing device 10 is able to display the "cancel" button for cancelling the registration of the execution process (see (7) in FIG. 11) and a "register process" button for confirming the registration of the execution process in the case where the operator O has confirmed that there is no problem in the test result (see (8) in FIG. 11).

### 2-3-5. Specific example of set value calculation process performed by data processing device 10

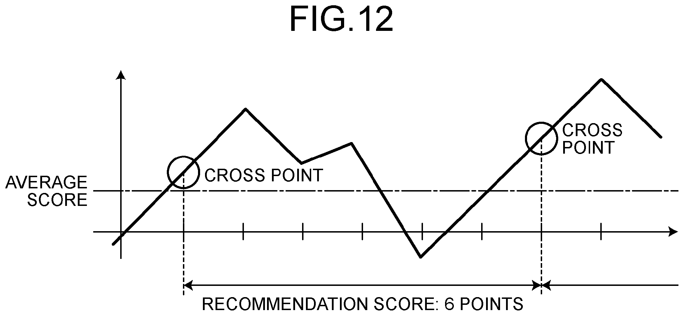

In the following, a specific example of the set value calculation process performed by the generating unit 15c included in the data processing device 10 will be described with reference to FIG. 12. FIG. 12 is a diagram illustrating the specific example of the set value calculation process performed by the data processing device 10 according to the embodiment. In the following, as the set value calculation process performed by the data processing device 10, a process of calculating, as a set value, the moving average score to which a zero cross method that is one example of a predetermined algorithm is applied will be described.

The data processing device 10 is able to calculate an optimum set value (parameter) from a tendency of the input value on the basis of the algorithm or a computation process. In the case where a moving average score of the moving average is desired to be automatically set, the data processing device 10 is able to automatically decide the moving average score by utilizing the zero cross method described below.

At a first step, the data processing device 10 acquires measurement data in a certain period. At this time, in the case where the processing model PM is used, the data processing device 10 may acquire the measurement data that has been assigned by the operator O as the learning data section. At a second step, the data processing device 10 applies the zero cross method to the acquired measurement data, and calculates an average period of the data. Here, the data processing device 10 calculates an average value of the measurement data, accumulates an interval (A) in which the average value exceeds, counts the number of intervals (B) in which the average value exceeds, and calculates a value obtained by dividing the value of (A) by the value of (B) as the data average period. At a third step, the data processing device 10 set the calculated data average period as the set value of the moving average score.

FIG. 12 illustrates an example in which a period in a certain section is six points obtained as a result of applying the zero cross method. In other words, in the example illustrated in FIG. 12, the average period performed by calculating the average period of the input value indicates six points, the data processing device 10 performs a process by using the moving average as six points.

The set value calculation process described above is an example in which the process is performed by using the algorithm or the computation process, but the data processing device 10 is also able to automatically set the moving average to the set value derived from a past track record or an empirical rule. In other words, in the case where it is possible to estimate a set value from the measurement data that corresponds to the past track record or from the empirical rule, or in the case where it is known in advance that effects is able to be obtained by using a specific set value, the data processing device 10 is also able to perform automatic setting of the set value of each of the processes.

For example, in the case where the data processing device 10 performs the set value calculation process of the data analysis process using the analysis model AM, the data processing device 10 acquires the history information in which the output data of the past measurement data, the alarm determination, and the like is stored in the storage unit 14, extracts a period in which an appropriate data analysis process included in the acquired history information is being performed, and performs automatic setting of the model parameter of the analysis model AM in the corresponding period as an effective set value on the basis of the past track record or the empirical rule. At this time, the data processing device 10 may also acquire, as the history information, the past measurement data that includes the learning data of the analysis model AM, that is managed by the operator O, and that is related to the plant, or may also acquire the past measurement data that is related to a plant that is different from the plant managed by the operator O and in which an effective data analysis process has been performed. Furthermore, the data processing device 10 may also extract a period assigned by the operator O as the period in which an appropriate data analysis process is being performed, or may also extract a period in which labeling is being performed on the appropriate data analysis process.

### 2-3-6. Specific example 5 of display screen displayed on data processing device 10

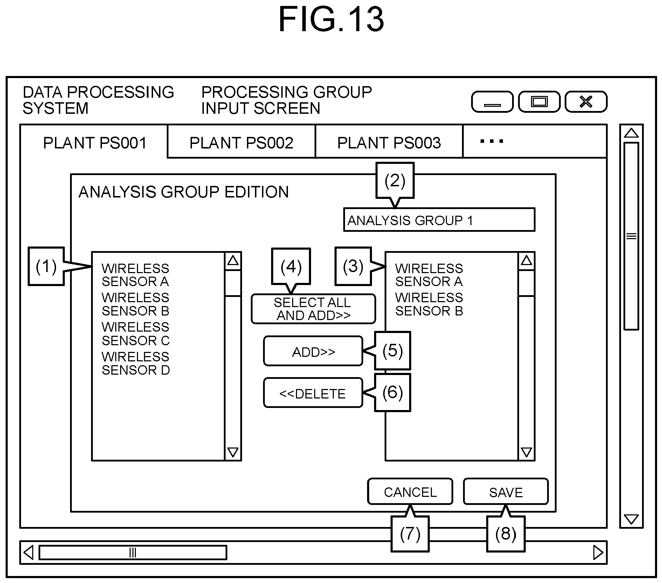

In the following, a specific example 5 of the display screen that is displayed on the display unit 12 included in the data processing device 10 and a processing group input screen in which a processing group is able to be input will be described with reference to FIG. 13. FIG. 13 is a diagram illustrating the specific example 5 of the display screen displayed on the data processing device 10 according to the embodiment. In the following, a processing group component selection list, a processing group name input box, and a processing group setting item that are displayed on the " processing group input screen provided in the data processing system" will be described.

### 2-3-6-1. Processing group component selection list

The data processing device 10 displays a selection list that is selectable by the operator O as processing group components (see (1) in FIG. 13). In the example illustrated in FIG. 13, the data processing device 10 displays, as the selectable processing group components, a list of the "wireless sensor A", a "wireless sensor B", a "wireless sensor C", and a "wireless sensor D". At this time, the operator O is able to select a plurality of processing group components by performing a click operation on the processing group component that the operator O desires to select as the same processing group.

### 2-3-6-2. Processing group name input box

The data processing device 10 displays a processing group name input box in which the name of the processing group is able to be input by the operator O (see (2) in FIG. 13). In the example illustrated in FIG. 13, the data processing device 10 displays, as the name of the processing group to be input, the text box in which the "analysis group 1" has been input. At this time, the operator O is able to change the name of the processing group by performing a click operation on the text box.

### 2-3-6-3. Processing group setting item

The data processing device 10 displays a processing group setting item that is used to input a processing group (see (3) to (6) in FIG. 13). In the example illustrated in FIG. 11, as the list indicating the processing group components that have already been selected by the operator O included in the processing group component selection list, the data processing device 10 displays the "wireless sensor A" and the "wireless sensor B" (see (3) in FIG. 13). At this time, the operator O is also able to select all of the processing group components included in the processing group component selection list by performing a click operation on "select all and add" (see (4) in FIG. 13). Furthermore, the operator O is also able to further select one or more processing group components selected on the processing group component selection list by performing a click operation on the "add" button (see (5) in FIG. 13). Furthermore, the operator O is also able to clear the selection of one or more of the already selected processing group component by performing a click operation on the "delete" button (see (6) in FIG. 13).

### 2-3-6-4. Others

As indicated by the example illustrated in FIG. 13, the data processing device 10 is able to display a "cancel" button for cancelling an input of the processing group (see (7) in FIG. 13), and a "save" button for deciding an input of the processing group (see (8) in FIG. 13). Furthermore, the operator O generates a processing group, in which the sensors or the like that correspond to the processing group components displayed at (3) illustrated in FIG. 13 and that has been input to (2) illustrated in FIG. 13, by performing a click operation on the "save" button.

### 2-4. Configuration example and process example of data collection instrument 20

A configuration example and a process example of the data collection instrument 20 will be described with reference to FIG. 2. The data collection instrument 20 is a plant instrument, such as the control instrument 20A, the cloud server 20B, and the via data server 20C.

### 2-4-1. Control instrument 20A

The control instrument 20A performs various kinds of control. For example, the control instrument 20A controls the sensor instrument 30 installed in the plant by using the collected pieces of measurement data and the output calculation data. The control instrument 20A collects the pieces of measurement data measured by the sensor instrument 30. For example, the control instrument 20A collects, as the measurement data, the pieces of sensor data including the temperature data, the pressure data, the flow rate data, and the like. Furthermore, the control instrument 20A may also output the calculation data by using the sensor data collected from the sensor instrument 30. Furthermore, the control instrument 20A transmits the measurement data and the calculation data to the data processing device 10 or the via data server 20C.

### 2-4-2. Cloud server 20B

The cloud server 20B is installed in a cloud environment, and collects the pieces of measurement data measured by the sensor instrument 30. For example, the cloud server 20B collects the pieces of sensor data including the temperature data, the pressure data, the flow rate data, and the like as the measurement data by way of the communication instrument. Furthermore, the cloud server 20B may also output the calculation data by using the pieces of sensor data collected from the sensor instrument 30. Furthermore, the cloud server 20B transmits the measurement data and the calculation data to the data processing device 10 or the via data server 20C.

### 2-4-3. Via data server 20C

The via data server 20C constitutes a data linkage service or the like, and receives the pieces of measurement data collected by the control instrument 20A and the cloud server 20B. Furthermore, the via data server 20C receives the calculation data that has been output by the control instrument 20A or the cloud server 20B. Furthermore, the via data server 20C transmits the measurement data and the calculation data to the data processing device 10 or the cloud server 20B.

### 2-5. Configuration example and process example of sensor instrument 30

A configuration example and a process example of the sensor instrument 30 will be described with reference to FIG. 2. The sensor instrument 30 is a plant instrument, such as the wireless sensor 30A, the analog sensor 30B, and the optical fiber sensor 30C.

### 2-5-1. Wireless sensor 30A

The wireless sensor 30A is installed in a small-sized plant instrument and measures, as the measurement data, pieces of sensor data including the temperature data, the pressure data, the flow rate data, and the like. Furthermore, the wireless sensor 30A transmits the measured measurement data to the data collection instrument 20 or the data processing device 10.

### 2-5-2. Analog sensor 30B

The analog sensor 30B measures, as the measurement data, pieces of sensor data including the temperature data, the pressure data, the flow rate data, and the like that are analog data. Furthermore, the analog sensor 30B transmits the measured measurement data to the data collection instrument 20 or the data processing device 10.

### 2-5-3. Optical fiber sensor 30C

The optical fiber sensor 30C is constituted by an optical fiber, and measures pieces of sensor data including the temperature data, the distortion data, and the like. Furthermore, the optical fiber sensor 30C transmits the measured measurement data to the data collection instrument 20 or the data processing device 10.

### 3. Flow of process performed in data processing system 100

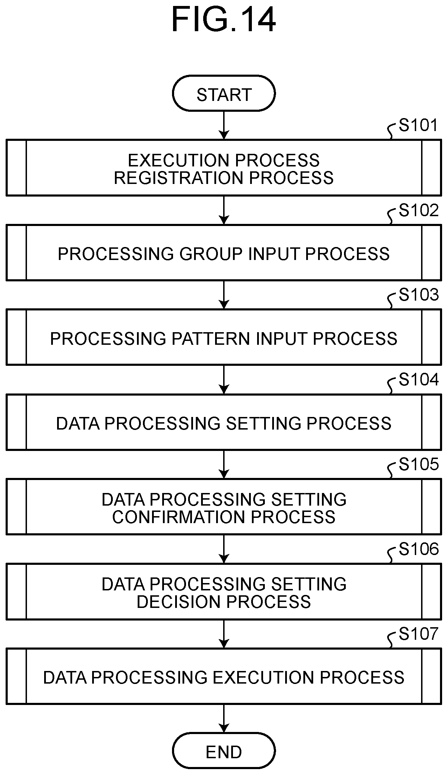

The flow of the process performed in the data processing system 100 according to the embodiment will be described with reference to FIG. 14 to FIG. 21. In the following, the flow of the process performed by the entire data processing system 100 will be described first, and then, the execution process registration process, processing group input process, the processing pattern input process, the data processing setting process, the data processing setting confirmation process, the data processing setting decision process, and the data processing execution process will be described.

### 3-1. Process performed in entire data processing system 100

The flow of the process performed in the entire data processing system 100 according to the embodiment will be described with reference to FIG. 14. FIG. 14 is a flowchart illustrating one example of the flow of the process performed in the entire data processing system 100 according to the embodiment. Moreover, the processes performed at Steps S101 to S107 described below may also be performed in different order. Furthermore, from among the processes performed at Steps S101 to S107, there may also be a process that is omitted.

### 3-1-1. Execution process registration process

At a first step, the data processing device 10 performs an execution process registration process (Step S101). For example, the data processing device 10 accepts, as the definition information, the execution process that has been registered by the operator O by performing the processes at Steps S201 to S204 that will be described later.

### 3-1-2. Processing group input process

At a second step, the data processing device 10 performs the processing group input process (Step S102). For example, the data processing device 10 accepts the processing group that has been input by the operator O by performing the processes at Steps S301 to S303 that will be described later.

### 3-1-3. Processing pattern input process

At a third step, the data processing device 10 performs the processing pattern input process (Step S103). For example, the data processing device 10 accepts the processing pattern that has been input by the operator O by performing the processes at Steps S401 to S405 that will be described later.

### 3-1-4. Data processing setting process

At a fourth step, the data processing device 10 performs the data processing setting process (Step S104). For example, the data processing device 10 generates the processing setting information for performing the process of setting the processing pattern by performing the processes at Steps S501 to S505 that will be described later.

### 3-1-5. Data processing setting confirmation process

At a fifth step, the data processing device 10 performs the data processing setting confirmation process (Step S105). For example, the data processing device 10 performs a simulation on the basis of the generated processing setting information by performing the processes at Steps S601 to S602 that will be described later.

### 3-1-6. Data processing setting decision process

At a sixth step, the data processing device 10 performs the data processing setting decision process (Step S106). For example, the data processing device 10 calculates a set value and builds the processing model PM by performing the processes at Steps S701 to S702 that will be described later.

### 3-1-7. Data processing execution process

At a seventh step, the data processing device 10 performs the data processing execution process (Step S107). For example, the data processing device 10 performs the data processing having the input processing pattern on the processing group on the basis of the generated processing setting information by performing the processes at Steps S801 to S805 that will be described later.

### 3-2. Execution process registration process

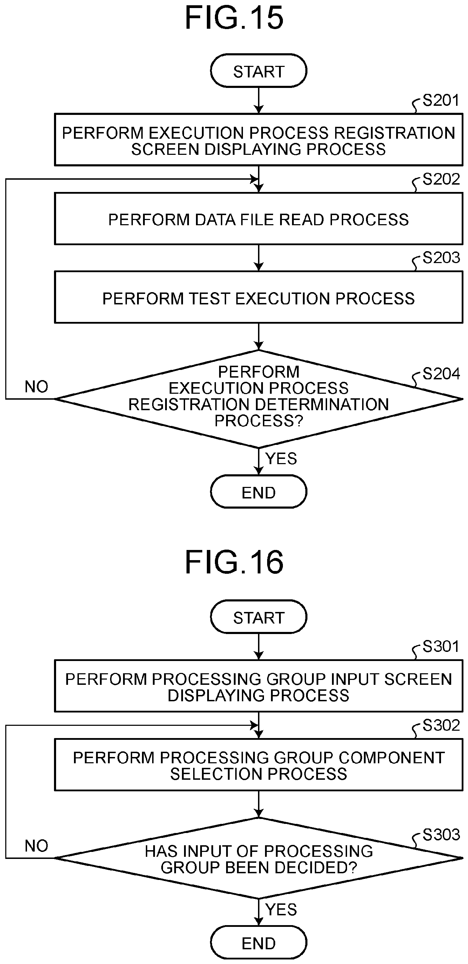

The flow of the execution process registration process performed in the data processing system 100 according to the embodiment will be described with reference to FIG. 15. FIG. 15 is a flowchart illustrating one example of the flow of the execution process registration process performed in the data processing system 100 according to the embodiment. Moreover, the processes performed at Steps S201 to S204 described below may also be performed in different order. Furthermore, from among the processes performed at Steps S201 to S204, there may also be a process that is omitted.

### 3-2-1. Execution process registration screen displaying process

At a first step, the data processing device 10 performs the execution process registration screen displaying process (Step S201). For example, the data processing device 10 displays, on the monitor screen, the execution process registration screen in which each of the processes that are used for the data processing is executable by the operator O.

### 3-2-2. Data file read process

At a second step, the data processing device 10 performs the data file read process (Step S202). For example, the data processing device 10 reads and saves the data file that defines the execution process to be performed on the DLL file, the EXE file, the text file, or the like that has been registered by the operator O.

### 3-2-3. Test execution process

At a third step, the data processing device 10 performs the test execution process (Step S203). For example, the data processing device 10 inputs an arbitrary value to the registered data file, and conducts a test to determine whether the corresponding execution process is appropriately performed.

### 3-2-4. Execution process registration determination process

At a fourth step, the data processing device 10 performs the execution process registration determination process (Step S204). At this time, when the data processing device 10 decides the execution process registration process on the basis of the operation performed by the operator O (Yes at Step S204), the data processing device 10 ends the execution process registration process. In contrast, when the data processing device 10 does not decide the execution process registration process on the basis of the operation performed by the operator O (No at Step S204), the data processing device 10 returns to the process at Step S201.

### 3-3. Processing group input process

The flow of the processing group input process performed in the data processing system 100 according to the embodiment will be described with reference to FIG. 16. FIG. 16 is a flowchart illustrating one example of the flow of the processing group input process performed in the data processing system 100 according to the embodiment. Moreover, the processes performed at Steps S301 to S303 described below may also be performed in different order. Furthermore, from among the processes performed at Steps S301 to S303, there may also be a process that is omitted.

### 3-3-1. Processing group input screen displaying process

At a first step, the data processing device 10 performs the processing group input screen displaying process (Step S301). For example, the data processing device 10 displays, on the monitor screen, the processing group input screen that enables an input of the processing group in which the same data processing is performed by the operator O.

### 3-3-2. Processing group component selection process

At a second step, the data processing device 10 performs the processing group component selection process (Step S302). For example, the operator O selects the processing group component belonging to the processing group on the processing group input screen.

### 3-3-3. Processing group input determination process

At a third step, the data processing device 10 performs the processing group input determination process (Step S303). At this time, when the data processing device 10 decides the processing group input process on the basis of the operation performed by the operator O (Yes at Step S303), the data processing device 10 ends the input of the processing group. In contrast, when the data processing device 10 does not decide the processing group input process on the basis of the operation performed by the operator O (No at Step S303), the data processing device 10 returns to the process at Step S302.

### 3-4. Processing pattern input process

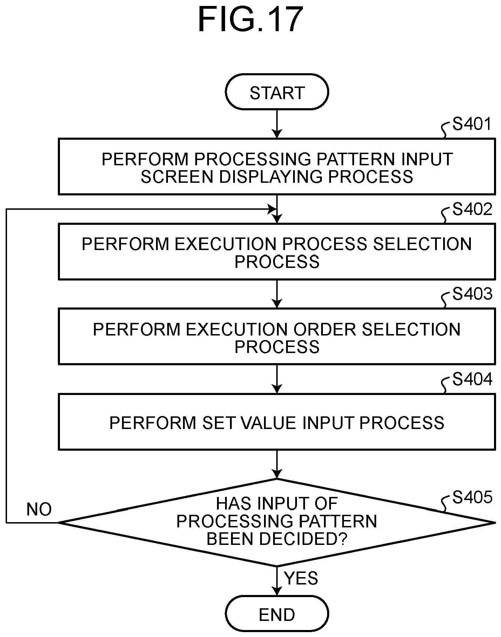

The flow of the processing pattern input process performed in the data processing system 100 according to the embodiment will be described with reference to FIG. 17. FIG. 17 is a flowchart illustrating one example of the flow of the processing group input process performed in the data processing system 100 according to the embodiment. Moreover, the processes performed at Steps S401 to S405 described below may also be performed in different order. Furthermore, from among the processes performed at Steps S401 to S405, there may also be a process that is omitted.

### 3-4-1. Processing pattern input screen displaying process

At a first step, the data processing device 10 performs the processing pattern input screen displaying process (Step S401). For example, the data processing device 10 displays, on the monitor screen, the processing pattern input screen that enables each of the execution process used for the data processing and the execution order to be input by the operator O.

### 3-4-2. Execution process selection process

At a second step, the data processing device 10 performs the execution process selection process (Step S402). For example, the operator O selects the execution process that is used for the data processing on the processing pattern input screen.

### 3-4-3. Execution order selection process

At a third step, the data processing device 10 performs the execution order selection process (Step S403). For example, the operator O selects the execution order of the execution process that has been selected on the processing pattern input screen.

### 3-4-4. Set value input process

At a fourth step, the data processing device 10 performs the set value input process (Step S404). For example, the operator O inputs the set value of the execution process that has been selected on the processing pattern input screen.

### 3-4-5. Processing pattern input determination process

At a fifth step, the data processing device 10 performs the processing pattern input determination process (Step S405). At this time, when the data processing device 10 decides the processing pattern input process on the basis of the operation performed by the operator O (Yes at Step S405), the data processing device 10 ends the input of the processing pattern. In contrast, when the data processing device 10 does not decide the processing pattern input process on the basis of the operation performed by the operator O (No Step S405), the data processing device 10 returns to the process at Step S402.

### 3-5. Data processing setting process

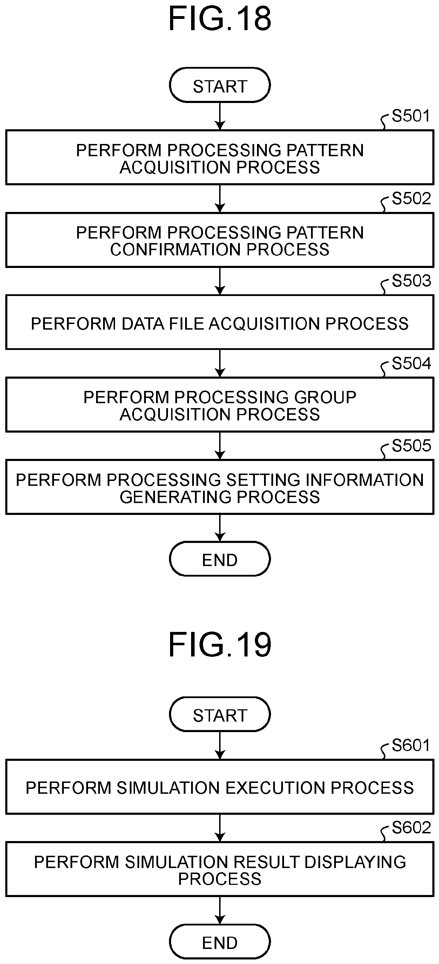

The flow of the data processing setting process performed in the data processing system 100 according to the embodiment will be described with reference to FIG. 18. FIG. 18 is a flowchart illustrating one example of the flow of the data processing setting process performed in the data processing system 100 according to the embodiment. Moreover, the processes performed at Steps S501 to S505 described below may also be performed in different order. Furthermore, from among the processes performed at Steps S501 to S505, there may also be a process that is omitted.

### 3-5-1. Processing pattern acquisition process

At a first step, the data processing device 10 performs the processing pattern acquisition process (Step S501). For example, the data processing device 10 acquires the processing pattern that has been input by the operator O.

### 3-5-2. Processing pattern confirmation process

At a second step, the data processing device 10 performs the processing pattern confirmation process (Step S502). For example, the data processing device 10 confirms the consistency of the execution process used for the processing pattern and the execution order that have been input by the operator O.

### 3-5-3. Data file acquisition process

At a third step, the data processing device 10 performs the data file acquisition process (Step S503). For example, the data processing device 10 acquires the EXE file corresponding to the execution process included in the processing pattern.

### 3-5-4. Processing group acquisition process

At a fourth step, the data processing device 10 performs the processing group acquisition process (Step S504). For example, the data processing device 10 acquires the processing group that has been input by the operator O.

### 3-5-5. Processing setting information generating process

At a fifth step, the data processing device 10 performs the processing setting information generating process (Step S505). For example, the data processing device 10 arranges the acquired EXE file in the execution order that is indicated by the processing pattern, and generates the processing setting information that is associated with the acquired processing group.

### 3-6. Data processing setting confirmation process

The flow of the data processing setting confirmation process performed in the data processing system 100 according to the embodiment will be described with reference to FIG. 19. FIG. 19 is a flowchart illustrating one example of the flow of the data processing setting confirmation process performed in the data processing system 100 according to the embodiment. Moreover, the processes performed at Steps S601 to S602 described below may also be performed in different order. Furthermore, from among the processes performed at Steps S601 to S602, there may also be a process that is omitted.

### 3-6-1. execution process performed on simulation

At a first step, the data processing device 10 performs the simulation execution process (Step S601). For example, the data processing device 10 uses the generated processing setting information and the past measurement data, and performs a simulation of the processing group.

### 3-6-2. Simulation result displaying process

At a second step, the data processing device 10 performs the simulation result displaying process (Step S602). For example, the data processing device 10 displays the measurement value graph and the alarm graph corresponding to the simulation results on the monitor screen.

### 3-7. Data processing setting decision process

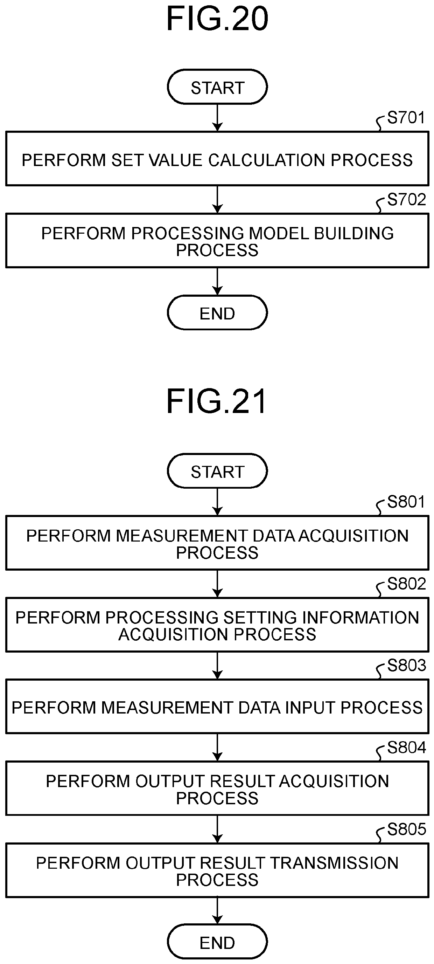

The flow of the data processing setting decision process performed in the data processing system 100 according to the embodiment will be described with reference to FIG. 20. FIG. 20 is a flowchart illustrating one example of the flow of the data processing setting decision process performed in the data processing system 100 according to the embodiment. Moreover, the processes performed at Steps S701 to S702 described below may also be performed in different order. Furthermore, from among the processes performed at Steps S701 to S702, there may also be a process that is omitted.

### 3-7-1. Set value calculation process

At a first step, the data processing device 10 performs the set value calculation process (Step S701). For example, the data processing device 10 calculates a set value for each execution process by using the algorithm that has been set for each execution process or by using the history information that includes the past measurement data. Furthermore, the data processing device 10 calculates an average period by using the zero cross method.

### 3-7-2. Processing model building process

At a second step, the data processing device 10 performs the processing model building process (Step S702). For example, the data processing device 10 generates the learning data on the basis of the measurement data obtained in the period that has been assigned by the operator O, and performs learning of the analysis model AM or the control model CM by using the learning data.

### 3-8. Data processing setting process

The flow of the data processing execution process performed in the data processing system 100 according to the embodiment will be described with reference to FIG. 21. FIG. 21 is a flowchart illustrating one example of the flow of the data processing execution process performed in the data processing system 100 according to the embodiment. Moreover, the processes performed at Steps S801 to S805 described below may also be performed in different order. Furthermore, from among the processes performed at Steps S801 to S805, there may also be a process that is omitted.

### 3-8-1. Measurement data acquisition process

At a first step, the data processing device 10 performs the measurement data acquisition process (Step S801). For example, the data processing device 10 acquires the measurement data that has been measured by the sensor instrument 30 belonging to the processing group by way of the data collection instrument 20.

### 3-8-2. Processing setting information acquisition process

At a second step, the data processing device 10 performs the processing setting information acquisition process (Step S802). For example, the data processing device 10 acquires the processing setting information associated with the processing pattern from the processing setting information storage unit 14d.

### 3-8-3. Measurement data input process

At a third step, the data processing device 10 performs the measurement data input process (Step S803). For example, the data processing device 10 inputs the acquired measurement data to the data analysis process.

### 3-8-4. Output result acquisition process

At a fourth step, the data processing device 10 performs the output result acquisition process (Step S804). For example, the data processing device 10 acquires the result (alarm, etc.) obtained by performing the data analysis process using the processing setting information.

### 3-8-5. Processing setting information generating process

At a fifth step, the data processing device 10 performs the output result transmission process (Step S805). For example, the data processing device 10 transmits the output result of the acquired alarm or the like to the data collection instrument 20 or the sensor instrument 30.

### 4. Effects of embodiment

Lastly, the effects of the embodiment will be described. In the following, the effects 1 to 19 corresponding to the processes according to the embodiment will be described.

### 4-1. Effect 1

In the above described processes according to the embodiment, the data processing device 10 stores therein the definition information for defining the processing operation of each of the plurality of execution processes, accepts, as the processing pattern, a selection of each of the execution processes that are used for the data processing and a selection of the execution order of the selected execution processes, and generates, on the basis of the accepted processing pattern and the definition information, the processing setting information for causing the processing pattern to be performed. As a result of this, in these processes, it is possible to perform appropriate setting of the data processing.

### 4-2. Effect 2

As a second effect, in the above described processes according to the embodiment, the data processing device 10 generates the analysis model AM that is the learning model by performing learning by using the learning data, stores the analysis model AM as the definition information, and generates the processing setting information in which the definition information for defining each of the execution processes that are indicated by the analysis pattern corresponding to the accepted processing pattern is associated with the accepted analysis pattern. As a result of this, in these processes, it is possible to perform appropriate setting of the data analysis process including the analysis model AM.

### 4-3. Effect 3

As a third effect, in the above described processes according to the embodiment, the data processing device 10 generates the control model CM that is the learning model by performing learning by using the learning data, stores the control model CM as the definition information, and generates the processing setting information in which the definition information for defining each of the execution processes that are indicated by the control pattern corresponding to the accepted processing pattern is associated with the accepted control pattern. As a result of this, in these processes, it is possible to perform appropriate setting of the data control process including the control model CM.

### 4-4. Effect 4

As a fourth effect, in the above described processes according to the embodiment, the data processing device 10 executes the data processing by using the processing setting information. As a result of this, in these processes, it is possible to perform appropriate setting of the data processing, and it is also possible to execute appropriate data processing.

### 4-5. Effect 5

As a fifth effect, in the above described processes according to the embodiment, the data processing device 10 accepts the processing group that indicates the processing object that is applied to the processing pattern, and associates the processing group with the processing setting information. As a result of this, in these processes, it is possible to perform appropriate setting of the data processing, and it is also possible to start the data processing on a large amount of measurement data at a time as batch processing.

### 4-6. Effect 6

As a sixth effect, in the above described processes according to the embodiment, the data processing device 10 accepts the processing group that includes at least one of instruments between at least one of the sensor instruments 30 each of which measures the measurement data and at least one of the data collection instruments 20 each of which collects the measurement data from at least one of the sensor instruments 30. As a result of this, in these processes, it is possible to perform appropriate setting of the data processing, and it is also possible to start the data processing on a large amount of measurement data, at a time as batch processing, that has been collected in units of the sensor instruments 30 and in units of the data collection instruments 20.

### 4-7. Effect 7

As a seventh effect, in the above described processes according to the embodiment, the data processing device 10 accepts, as the processing pattern on the displayed setting screen, the selection of each of the execution processes and a selection of the execution order of the selected execution processes. As a result of this, in these processes, it is possible to perform appropriate setting of the data processing by displaying the processing pattern such that the operator O is able to input the processing pattern by the operation performed by the operator O.

### 4-8. Effect 8

As an eighth effect, in the above described processes according to the embodiment, the data processing device 10 connects, on the displayed setting screen, the blocks that indicate the respective execution processes by using lines each having an arrow that indicates the execution order of the execution processes, so that the data processing device 10 accepts the selection of each of the execution processes and the selection of the execution order of the selected execution processes as the processing pattern. As a result of this, in these processes, it is possible to perform appropriate setting of the data processing by displaying the processing pattern such that the operator O is able to input the processing pattern by using the flowchart by the operation performed by the operator O.

### 4-9. Effect 9

As a ninth effect, in the above described processes according to the embodiment, the data processing device 10 accepts, on the displayed setting screen, an input of the set value that is used for the execution operation of each of the execution processes, and stores the accepted set value as the definition information in the storage unit 14. As a result of this, in these processes, it is possible to perform appropriate setting of the data processing by displaying the various kinds of parameters such that the operator O is able to input setting of the various kinds of parameters by the operation performed by the operator O.

### 4-10. Effect 10

As a tenth effect, in the above described processes according to the embodiment, the data processing device 10 accepts, on the displayed setting screen, an assignment of a frequency with which learning of the processing model PM is performed or an assignment of a section of the learning data that is used for the learning. As a result of this, in these processes, it is possible to perform appropriate setting of the data processing by displaying learning setting of the processing model PM such that the operator O is able to input the learning setting by the operation performed by the operator O.

### 4-11. Effect 11

As an eleventh effect, in the above described processes according to the embodiment, the data processing device 10 determines whether or not the data processing is executable by confirming an arrangement of the blocks that indicate the respective execution processes indicated by the processing pattern and an arrangement of the arrows that indicate the execution order of the execution processes. As a result of this, in these processes, it is possible to perform appropriate setting of the data processing by performing a syntax check of the processing pattern at the time of setting of the processing pattern.

### 4-12. Effect 12

As a twelfth effect, in the above described processes according to the embodiment, the data processing device 10 performs a simulation of the data processing that is executed by using the processing setting information, and displays the simulation result. As a result of this, in these processes, it is possible to perform appropriate setting of the data processing by confirming validity of the data processing setting before the data processing is performed.

### 4-13. Effect 13

As a thirteenth effect, in the above described processes according to the embodiment, the data processing device 10 accepts, on the setting screen that is displayed on the terminal used by the operator O, at least one of the DLL file, the EXE file, and the text file as the data file in which each of the plurality of execution processes is executable, and stores the accepted file in the storage unit 14. As a result of this, in these processes, it is possible to perform appropriate setting of the data processing by displaying the data file of the needed execution process such that the data file is able to be input by the operation performed by the operator O.

### 4-14. Effect 14

As a fourteenth effect, in the above described processes according to the embodiment, the data processing device 10 performs a test of each of the execution processes performed by the data file by inputting, on the displayed setting screen, a predetermined input value to the accepted data file. As a result of this, in these processes, it is possible to perform appropriate setting of the data processing by confirming the execution operation of the data file before registration of the execution process.

### 4-15. Effect 15

As a fifteenth effect, in the above described processes according to the embodiment, the data processing device 10 calculates the set value that is used to perform each of the execution processes by using a predetermined algorithm that is applied to each of the execution processes or by using the history information that is related to the processing operation of each of the execution processes, and performs the data processing on the processing object by using the calculated set value. As a result of this, in these processes, it is possible to perform appropriate setting of the data processing by performing automatic setting of various kinds of parameters in accordance with each of the execution processes.

### 4-16. Effect 16

As a sixteenth effect, in the above described processes according to the embodiment, the data processing device 10 calculates the average period of the time series data by applying the zero cross method to the time series data that has been input to each of the execution process. As a result of this, in these processes, it is possible to perform appropriate setting of the data processing by performing automatic setting of the parameter, such as the moving average score, by applying the zero cross method as the predetermined algorithm.

### 4-17. Effect 17

As a seventeenth effect, in the above described processes according to the embodiment, the data processing device 10 calculates the set value that is used for learning of the processing model PM by using the history information. As a result of this, in these processes, it is possible to perform appropriate setting of the data processing by performing the automatic setting of the parameter by using the past track record or an empirically obtained value.

### 4-18. Effect 18

As an eighteenth effect, in the above described processes according to the embodiment, the data processing is a data analysis of the measurement data measured by the sensor instrument 30 that is installed in the plant. As a result of this, in these processes, it is possible to perform appropriate setting of the data analysis process on the pieces of measurement data that have been collected from the sensor instruments 30 installed in the plant.

### 4-19. Effect 19

As a nineteenth effect, in the above described processes according to the embodiment, the data processing is data control that controls the plant instrument that is installed in the plant. As a result of this, in these processes, it is possible to perform appropriate setting of the data control process on the plant instrument related to the measurement data collected from the sensor instruments 30 installed in the plant.

### System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by the each of the devices can be implemented by a CPU and by programs analyzed and executed by the CPU or implemented as hardware by wired logic.

### Hardware

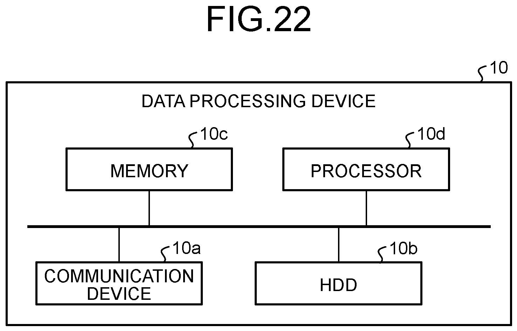

In the following, an example of a hardware configuration of a data processing device 10 that is the information management device will be described. Moreover, the same hardware configuration may also be used for the other devices. FIG. 22 is a diagram illustrating an example of the hardware configuration according to the embodiment. As illustrated in FIG. 22, the data processing device 10 includes a communication device 10a, a hard disk drive (HDD) 10b, a memory 10c, and a processor 10d. Furthermore, each of the units illustrated in FIG. 22 is connected by a bus or the like with each other.

The communication device 10a is a network interface card or the like, and communicates with another server. The HDD 10b stores therein the programs and the databases that operate the functions illustrated in FIG. 2.

The processor 10d operates the process that executes each of the functions described above in FIG. 2 by reading the programs that execute the same process as that performed by each of the processing units illustrated in FIG. 2 from the HDD 10b or the like and loading the read programs in the memory 10c. For example, the process executes the same functions as those performed by each of the processing units included in the data processing device 10. Specifically, the processor 10d reads, from the HDD 10b or the like, the programs having the same functions as those performed by the acquisition unit 15a, the acceptance unit 15b, the generating unit 15c, the execution unit 15d, the learning unit 15e, and the like. Then, the processor 10d executes the process for executing the same processes as those performed by the acquisition unit 15a, the acceptance unit 15b, the generating unit 15c, the execution unit 15d, the learning unit 15e, and the like.

In this way, the data processing device 10 is operated as a device that performs various processing methods by reading and executing the programs. Furthermore, the data processing device 10 is also able to implement the same functions as those described above in the embodiment by reading the above described programs from a recording medium by a medium reading device and executing the read programs. Furthermore, the programs described in another embodiment are not limited to be executed by the data processing device 10. For example, the present invention may also be similarly used in a case in which another computer or a server executes a program or in a case in which another computer and a server cooperatively execute the program with each other.

The programs may be distributed via a network, such as the Internet. Furthermore, the programs may be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

According to the present invention, an advantage is provided in that it is possible to perform appropriate setting of data processing.

## Claims

1. An information processing apparatus (10) comprising:
a storage unit (14) that stores therein definition information for defining a processing operation of each of a plurality of processes;
an acceptance unit (15a) that accepts, as a processing pattern, a selection of each of the processes that are used for data processing and a selection of an execution order of the selected processes; and
a generating unit (15c) that generates, based on the accepted processing pattern and the definition information, processing setting information for causing the processing pattern to be performed.

2. The information processing apparatus (10) according to claim 1, further comprising a learning unit (15e) that generates a learning model by performing learning by using learning data, wherein
the storage unit (14) stores therein the learning model as the definition information, and
the generating unit (15c) generates the processing setting information in which the definition information on each of the processes that are indicated by an analysis pattern corresponding to the accepted processing pattern is associated with the accepted analysis pattern.

3. The information processing apparatus (10) according to claim 1 or 2, further comprising a learning unit (15e) that generates a learning model by performing learning by using learning data, wherein
the storage unit (14) stores therein the learning model as the definition information, and
the generating unit (15c) generates the processing setting information in which the definition information on each of the processes that are indicated by a control pattern corresponding to the accepted processing pattern is associated with the accepted control pattern.

4. The information processing apparatus (10) according to any one of claims 1 to 3, further comprising an execution unit (15d) that executes the data processing by using the processing setting information.

5. The information processing apparatus (10) according to any one of claims 1 to 4, wherein
the acceptance unit (15b) accepts a processing group that indicates a processing object that is applied to the processing pattern, and
the generating (15c) unit associates the processing group with the processing setting information.

6. The information processing apparatus (10) according to claim 5, wherein the acceptance unit (15b) accepts the processing group that includes at least one of instruments between at least one of measurement instruments each of which measures data on the processing object and at least one of collection instruments each of which collects the data from at least one of the measurement instruments.

7. The information processing apparatus (10) according to any one of claims 1 to 6, wherein the acceptance unit (15b) accepts, as the processing pattern on a setting screen displayed on a display unit (12), the selection of each of the processes and the selection of the execution order of the selected processes.

8. The information processing apparatus (10) according to claim 7, wherein the acceptance unit (15b) accepts, as the processing pattern on the setting screen, the selection of each of the processes and the selection of the execution order of the selected processes by connecting blocks that indicate the respective processes by lines with arrows each of which indicates the execution order of the processes.

9. The information processing apparatus (10) according to any one of claims 1 to 8, wherein the acceptance unit (15b) accepts, on a setting screen displayed on a display unit (12), an input of a set value that is used for an execution operation of each of the processes, and stores the accepted set value as the definition information in the storage unit (12).

10. The information processing apparatus (10) according to claim 9, wherein the acceptance unit (15b) accepts, on the setting screen displayed on the display unit (12), an assignment of a frequency with which learning of a learning model is performed or an assignment of a section of learning data that is used for the learning.

11. The information processing apparatus (10) according to any one of claims 1 to 10, wherein the generating unit (15c) determines whether or not the data processing is executable by confirming an arrangement of blocks that indicate the respective processes indicated by the processing pattern and an arrangement of arrows that indicates the execution order of the processes.

12. The information processing apparatus (10) according to any one of claims 1 to 11, wherein the generating unit (15c) performs a simulation of the data processing that is executed by using the processing setting information, and displays a simulation result.

13. The information processing apparatus (10) according to any one of claims 1 to 12, wherein the acceptance unit (15b) accepts, on a setting screen of a display unit (12), at least one of a dynamic-link library file, an executable file, and a text file as a data file in which each of the plurality of processes is executable, and stores the accepted data file in the storage unit (12).

14. The information processing apparatus (10) according to claim 13, wherein the acceptance unit (15b) performs a test of each of the processes performed by the data file by inputting, on the setting screen, a predetermined input value to the accepted data file.

15. The information processing apparatus (10) according to any one of claims 1 to 14, wherein the generating unit (15b) calculates a set value that is used to perform each of the processes by using a predetermined algorithm that is applied to each of the processes or by using history information that is related to a processing operation of each of the processes.

16. The information processing apparatus (10) according to claim 15, wherein the generating unit (15c) calculates an average period of time series data by applying a zero cross method to the time series data that has been input to each of the processes.

17. The information processing apparatus (10) according to claim 15 or 16, wherein the generating unit (15c) calculates the set value that is used for learning of a learning model by using the history information.

18. The information processing apparatus (10) according to any one of claims 1 to 17, wherein the data processing is a data analysis of data measured by a sensor instrument installed in a plant.

19. The information processing apparatus (10) according to any one of claims 1 to 18, wherein the data processing is data control that controls a plant instrument installed in a plant.

20. An information processing method that causes a computer (10) to execute a process comprising:
holding definition information for defining a processing operation of each of a plurality of processes;
accepting, as a processing pattern, a selection of each of the processes that are used for data processing and a selection of an execution order of the selected processes; and
generating, based on the accepted processing pattern and the definition information, processing setting information for causing the processing pattern to be performed.

21. An information processing program that causes a computer (10) to execute a process comprising:
holding definition information for defining a processing operation of each of a plurality of processes;
accepting, as a processing pattern, a selection of each of the processes that are used for data processing and a selection of an execution order of the selected processes; and
generating, based on the accepted processing pattern and the definition information, processing setting information for causing the processing pattern to be performed.
